# EUROPÄISCHE PATENTSCHRIFT

(11) **EP 0 363 719 B1**
(45) Veröffentlichungstag und Bekanntmachung des Hinweises auf die Patenterteilung: **15.12.1993**
(21) Anmeldenummer: 89117704.0
(22) Anmeldetag: 26.09.1989
(51) Int. Cl.: C08F 2/16, C08F 283/00, C09D 157/00

(54) **Organische Dispersionspolymerisate auf der Basis von ethylenisch ungesättigten Monomeren, die wasserlösliche und Vinylalkoholeinheiten mit einer Polyurethanpfropfgrundlage enthaltende Pfropfpolymerisate enthalten, Verfahren zu ihrer Herstellung und ihre Verwendung**
Dispersions of organic polymers based on ethylenically unsaturated monomers containing water soluble graft polymers containing graft polymers with a polyurethane backbone, their preparation process and their use
Dispersions de polymères organiques à base de monomères insaturés ethyléniquement, contenant des polymères greffés solubles dans l'eau contenant des unités d'alcoolvinylique avec comme base de greffage un polyuréthane, procédé de leur préparation et leur utilisation

(30) Priorität: 28.09.1988 DE 3832877
(43) Veröffentlichungstag der Anmeldung: 18.04.1990
(73) Patentinhaber: HOECHST AKTIENGESELLSCHAFT, 65926 Frankfurt am Main (DE)
(72) Erfinder: Rauterkus, Karl Josef, Dr., D-6233 Kelkheim(Taunus) (DE); Kroggel, Matthias, Dr., D-6233 Kelkheim(Taunus) (DE); Huth, Hans-Ulrich, Dr., D-6073 Egelsbach (DE)

(56) Entgegenhaltungen:
- DE-A- 1 953 349

## Beschreibung

Die Erfindung betrifft organische Dispersionspolymerisate auf der Basis von ethylenisch ungesättigten und polymerisationsfähigen bzw. copolymerisationsfähigen Monomeren, die in Gegenwart von Schutzkolloiden, bestehend aus wasserlöslichen und Vinylalkoholeinheiten auf einer Polyurethanpfropfgrundlage enthaltenden Pfropfpolymerisaten, durch radikalisch initiierte Emulsions-, Suspensions- oder Perlpolymerisation, vorzugsweise Emulsionspolymerisation, bzw. -copolymerisation, erhalten worden sind, Verfahren zu ihrer Herstellung und ihr Verwendung, vorzugsweise in wäßriger Dispersionsform.

Die erfindungsgemäß als Schutzkolloide verwendeten wasserlöslichen und Vinylalkoholeinheiten auf einer Polyurethanpfropfgrundlage enthaltenden Pfropfpolymerisate und ihre Herstellung sind u.a. Gegenstand der EP-A-0 308 832, auf die hiermit Bezug genommen wird.

Die Verwendung von wasserlöslichen und Vinylalkoholeinheiten auf einer Polyurethanpfropfgrundlage enthaltenden Pfropfpolymerisaten als Schutzkolloide bei Polymerisationen in wäßriger Dispersion war bisher weder bekannt noch wurde sie vorgeschlagen.

Gegenstand der Erfindung ist nunmehr die Verwendung von wasserlöslichen und Vinylalkoholeinheiten auf einer Polyurethanpfropfgrundlage enthaltenden Pfropfpolymerisaten als Schutzkolloide bei der Herstellung von organischen Dispersionspolymerisaten durch radikalisch initiierte Emulsions-, Suspensions- oder Perlpolymerisation bzw. -copolymerisation, vorzugsweise Emulsionspolymerisation bzw. -copolymerisation, nach üblichen Methoden in wäßrigem Medium.

Die Verwendung von wasserlöslichen Polymeren als Schutzkolloide bzw. Dispergiermittel, wie z. B. Polyvinylalkohol, Gelatine, Alkalisalze der Polyacrylsäure, Polyvinylpyrrolidon, (carboxylgruppenhaltigen) Zelluloseäthern, Polysacchariden (lösliche Stärke) sowie geeigneten Copolymerisaten mit funktionellen Gruppen auf der Basis von Vinylacetat/Acrylsäure/Maleinsäure bzw. deren Derivaten bei der Emulsionspolymerisation, insbesondere bei der Homo- bzw. Copolymerisation von Vinylestern, ist bekannt. An erster Stelle bei der Anwendung hochmolekularer synthetischer Dispergiermittel, insbesondere solcher, die durch Polymerisation hergestellt worden sind, steht bei der Emulsionspolymerisation bekanntlich der Polyvinylalkohol (PVAL), der gegebenenfalls auch in modifizierter Form, z. B. als nicht vollständig verseiftes Polyvinylacetat, als teilweise acetalisierter oder verätherter Polyvinylalkohol oder beispielsweise in Form eines verseiften Mischpolymerisats aus Vinylacetat und Ethylen, eingesetzt werden kann.
Insbesondere bei der Herstellung von Vinylacetat-Homo- oder Copolymerisatdispersionen - weniger dagegen bei der Herstellung von reinen Acrylatdispersionen oder von Acrylester/Styrol-Copolymerisatdispersionen - ist die Verwendung von Polyvinylalkohol als Schutzkolloid üblich, wobei sowohl grob- als auch feinteilige Latices auch ohne Emulgatorzusatz erhalten werden können.

Aus der GB-PS 779557 sind z. B. derartige polyvinylalkoholstabilisierten Polyvinylacetat-Dispersionen (Hydrolysegrad des PVAL 88 %) bekannt. Die Produkte sind häufig grobteilig, haben eine hohe bis sehr hohe Viskosität und können meist nur als Klebstoffdispersionen eingesetzt werden.
Feinteiligere homopolymere Vinylacetat-Latices kann man gemäß der GB-PS 777484 durch geeignete Kombination mehrerer Schutzkolloide, z. B. aus teilverseiftem Polyvinylacetat und einem Alkalisalz der Polymethacrylsäure, erhalten. Als hochwertige Beschichtungsmittel oder Bindemittel für Farben sind die hiermit erhältlichen Homopolymerisate jedoch nicht verwendbar.

Aus der JP-PS 58225111 sind auch Pfropfcopolymerisate aus Vinylacetat oder Vinylpropionat und Ethylen auf Polyurethanpfropfgrundlagen (Backbone) bekannt. Als Polyurethanpfropfgrundlagen werden Reaktionsprodukte aus langkettigen Glykolen, z. B. Polypropylenglykol, und Polyisocyanaten, z. B. Toluylendiisocyanat, verwendet. Das Gewichtsverhältnis der aufzupfropfenden Monomeren Ethylen und Vinylester soll 20:80 bis 50:50 betragen. Die Pfropfcopolymerisation wird in wäßriger Emulsion in Gegenwart von Schutzkolloiden und nichtionischen Tensiden durchgeführt und soll zu Dispersionspolymerisaten von hohem Molekulargewicht und feinteiligen Partikeln führen.

Die bisher bekannt gewordenen Schutzkolloide, insbesondere diejenigen auf Basis von Polyvinylalkohol, haben bekanntlich einige entscheidende Nachteile. Sie lassen sich zwar auch bei der Emulsionscopolymerisation von Vinylestern, insbesondere Vinylacetat, mit anderen Monomeren, z. B. (Meth-)Acrylestern, verwenden, werden aber vorzugsweise zur Herstellung von Vinylester-Homopolymerisatdispersionen eingesetzt und finden vor allem Anwendung bei der Herstellung von Klebstoffdispersionen. Dabei ist im allgemeinen die Mitverwendung von Emulgatoren notwendig, was jedoch neben dem negativen Einfluß des Polyvinylalkohols auf die Wasserfestigkeit von Dispersionspolymerisatfilmen deren Wasserfestigkeit zusätzlich vermindert. Außerdem lassen sich die meisten bekannten Schutzkolloide, insbesondere PVAL, nicht problemlos zur Emulsionspolymerisation von Acryl- und Methacrylsäureestern sowie von Vinylaromaten verwenden. Der Erfindung lag somit die Aufgabe zugrunde, ein möglichst universell einsetzbares Schutzkolloid zu entwickeln, das, unter Überwindung der Nachteile bekannter Schutzkolloide bei der Emulsionspolymerisation aller üblichen α,β-ethylenisch ungesättigten und polymerisationsfähigen Verbindungen, wie Vinylester, (Meth-)Acrylester, Vinylaromaten, Ethylen, Vinylchlorid, und (Meth-)Acrylnitril, eingesetzt werden kann, wobei die Verwendung weiterer Stabilisatoren, wie oberflächenaktive Verbindungen, Polysalze oder ionische Monomere, entweder gar nicht oder nur in untergeordnetem Maße erforderlich ist und nachteilige Einflüsse auf Folgeprodukte, wie z. B. Beschichtungen und Farbanstriche, infolge Verschlechterung der Wasserfestigkeit der Dispersionspolymerisatfilme vermieden werden können.

Die gestellte Aufgabe konnte nun überraschenderweise durch die Verwendung der nachfolgend charakterisierten wasserlöslichen Pfropfpolymerisate als Schutzkolloide, insbesondere bei der Emulsionspolymerisation, gelöst werden.

Gegenstand der Erfindung sind daher organische Dispersionspolymerisate auf der Basis von ethylenisch ungesättigten, polymerisationsfähigen bzw. copolymerisationsfähigen Monomeren, die in Gegenwart von Schutzkolloiden oder von Schutzkolloiden und Emulgatoren durch radikalisch initiierte Emulsions-, Suspensions- oder Perl-Polymerisation bzw. -Copolymerisation, vorzugsweise Emulsionspolymerisation bzw. -copolymerisation, in wäßrigem Medium hergestellt wurden und in wäßriger Dispersionsform oder in feindisperser trockener Pulverform vorliegen, dadurch gekennzeichnet, daß ihre Herstellung in Gegenwart von wasserlöslichen und Vinylalkoholeinheiten auf einer Polyurethanpfropfgrundlage enthaltenden Pfropfpolymerisaten als Schutzkolloid erfolgte und diese Pfropfpolymerisate in dem Dispersionspolymerisat enthalten sind, wobei die Polyurethanpfropfgrundlage in dem als Schutzkolloid verwendeten wasserlöslichen Pfropfpolymerisat mindestens 2 Urethangruppen im Molekül und Einheiten aus Diisocyanaten und gegebenenfalls geringen Mengen monofunktionellen Isocyanaten sowie Einheiten aus Diolen und/oder halbveresterten oder halbverätherten Diolresten enthält und auf die Polyurethanpfropfgrundlage Polymerreste bzw. Polymerketten aus Einheiten von Carbonsäurevinylestern mit 3 bis 20 C-Atomen und/oder deren Verseifungsprodukten und gegebenenfalls Einheiten von weiteren ethylenisch ungesättigten, polymerisationsfähigen und gegebenenfalls verseifungsfähigen sowie gegebenenfalls copolymerisierten Monomeren und/oder deren Verseifungsprodukten aufgepfropft sind, wobei der Anteil an Vinylalkoholeinheiten in dem wasserlöslichen Pfropfpolymerisat mindestens 20 Gew.-%, vorzugsweise 30 bis 85 Gew.-%, insbesondere 35 bis 75 Gew.-%, bezogen auf das wasserlösliche Pfropfpolymerisat, und der Verseifungsgrad der auf die Polyurethanpfropfgrundlage aufgepfropften Monomereinheiten mindestens 50 Mol-%, vorzugsweise mehr als 70 Mol-%, insbesondere mehr als 86 Mol-%, beträgt.

Die erfindungsgemäß verwendeten wasserlöslichen und Vinylalkoholeinheiten auf einer Polyurethanpfropfgrundlage enthaltenden Pfropfpolymerisate sind in den Dispersionspolymerisaten vorzugsweise in Mengen von 0,01 bis 20 Gew.-%, insbesonder 0,1 bis 10 Gew.-%, besonders bevorzugt 0,5 bis 6 Gew.-%, bezogen auf das Dispersionspolymerisat, enthalten.

Die in den wasserlöslichen und Vinylalkoholeinheiten enthaltenden Pfropfpolymerisaten enthaltenen Polyurethanpfropfgrundlagen besitzen vorzugsweise Molekulargewichte im Bereich von 200 bis 50000 g/mol, besonders bevorzugt > 5000 g/mol.

In den wasserlöslichen und Vinylalkoholeinheiten auf einer Polyurethanpfropfgrundlage enthaltenden Pfropfpolymerisaten beträgt der Anteil der auf die Polyurethanpfropfgrundlage aufgepfropften Polymerreste bei den erfindungsgemäß als wasserlösliche Schutzkolloide verwendeten Pfropfpolymerisaten vorzugsweise > 10 Gew.-%, insbesondere 40 bis 95 Gew.-%, besonders bevorzugt 56 bis 90 Gew.-%, bezogen auf das wasserlösliche Pfropfpolymerisat. Vorzugsweise sind die auf die Polyurethanpfropfgrundlage aufgepfropften Polymerreste teilweise oder vollständig verseift.

Das Eigenschaftsbild der erfindungsgemäß verwendeten wasserlöslichen und Vinylalkoholeinheiten enthaltenden Pfropfpolymerisate wird u.a. beeinflußt durch das Molekulargewicht und den Aufbau der Polyurethanpfropfgrundlagen, die Art, Zusammensetzung und Menge an aufgepfropften Monomereinheiten sowie das Molekulargewicht und den Hydrolysegrad des Pfropfpolymerisats.

Wie bereits oben ausgeführt, bestehen die Polyurethanpfropfgrundlagen aus Polyurethanen mit mindestens 2 Urethangruppen im Molekül, wobei die Anzahl der Urethangruppen pro Pfropfgrundlagenmolekül nach oben keiner besonderen Begrenzung unterliegt und im allgemeinen höhere Werte als 2 annehmen kann.

Die Polyurethanpfropfgrundlagen lassen sich nach üblichen Verfahren der Polyurethansynthese herstellen und werden bevorzugt unter Verwendung von Katalysatoren, wie z. B. tertiären Aminen oder organischen Zinnverbindungen, bei Temperaturen zwischen 60 und 120°C, vorzugsweise zwischen 70 und 100°C, synthetisiert.
Sie sind aus Diol- und Diisocyanatkomponenten aufgebaut. Prinzipiell sind alle bei der Polyurethansynthese verwendbaren Diole einsetzbar. Bevorzugt sind cycloaliphatische Diole, wie z. B. Cyclohexandiole, sowie aliphatische Diole mit vorzugsweise 2 bis 12 C-Atomen. Bevorzugt sind ferner Polyalkylenglykole, wie z. B. Polypropylenoxide, Polybutylenoxide, Mischpolymere aus Ethylenoxid, Propylenoxid, Butylenoxid, vorzugsweise deren Blockcopolymere, besonders bevorzugt sind die sog. Polyethylenglykole bzw. Polyethylenoxide, d.s. insbesondere die α,ω-Dihydroxypolyethylenoxide.

Vorzugsweise werden Polyethylenglykole mit Molekulargewichten zwischen 400 und 10000 g/mol verwendet, wobei Polyethylenglykole mit Molekulargewichten zwischen 400 und 1500 g/mol besonders bevorzugt sind. Die Polyethylenglykole werden gegebenenfalls in Kombination mit niedermolekularen aliphatischen Diolen, wie z. B. 1,4-Butandiol, 1,3-propandiol, Ethylenglykol bzw. Diethylenglykol, eingesetzt. Bevorzugt liegt ein molares Verhältnis von Polyethylenglykol zu niedermolekularem aliphatischem Diol von 1:0,1 bis 1:0,7 vor.

Als Diisocyanatkomponenten werden aromatische Diisocyanate, wie z. B. m- und p-Diisocyanatoxylol, 2,4-Diisocyanatotoluol, 2,6-Diisocyanatotoluol oder Gemische der beiden letzteren Isomeren, 1,5-Diisocyanatonaphthalin, 4,4′-Diisocyanatodiphenylmethan, 4,4′-Diisocyanatophenylbenzylether verwendet.

Bevorzugt werden aliphatische und/oder cycloaliphatische Diisocyanate eingesetzt. Bevorzugte aliphatische Diisocyanate sind z. B. solche mit 2 bis 12 C-Atomen im aliphatischen Rest, wie z. B. Ethylendiisocyanat, Propylendiisocyanat, Tetramethylendiisocyanat, 2,2,4-Trimethylhexamethylendiisocyanat. Bevorzugte cycloaliphatische Diisocyanate sind z. B. 1,4-Diisocyanatocyclohexan, 4,4′-Methylen-bis(cyclohexyldiisocyanat), 1-Methyl-2,4-cyclohexyldiisocyanat, 1-Methyl-2,6-cyclohexyldiisocyanat, 1,3-Bis(isocyanatomethyl)-cyclohexan.

Besonders bevorzugt ist die Verwendung von 1,6-Hexamethylendiisocyanat und/oder insbesondere Isophorondiisocyanat.

Die Molverhältnisse von Diol- zu Diisocyanatkomponenten liegen vorzugsweise zwischen 1:0,99 und 1:0,5, insbesondere zwischen 1:0,98 und 1:0,7. Die mittleren Molekulargewichte der Polyurethane liegen vorzugsweise zwischen 200 und 50000 g/mol, insbesondere zwischen 1000 und 35000 g/mol, besonders bevorzugt zwischen 3000 und 17000 g/mol. Die Ermittlung der mittleren Molekulargewichte (Gewichtsmittel) kann nach üblichen experimentellen und/oder rechnerischen Methoden erfolgen. Zur Regelung des Molekulargewichtes bei der Herstellung der Polyurethanpfropfgrundlagen können Monoisocyanate verwendet werden.

Es ist darauf hinzuweisen, daß z. B. bei vorgegebenem Molekulargewicht für die Pfropfgrundlage die Anzahl ihrer Urethangruppen direkt von den Molekulargewichten der verwendeten Diol- bzw. Diisocyanat-Komponenten abhängt.

Zur Pfropfung auf die Polyurethanpfropfgrundlagen werden bevorzugt Vinylcarbonsäureester mit 3 bis 20 C-Atomen eingesetzt. Besonders bevorzugt sind Vinylacetat und/oder Vinylpropionat, insbesondere Vinylacetat. Bevorzugt sind ferner Gemische aus Vinylacetat und/oder Vinylpropionat und Versaticsäurevinylester.

Bevorzugt wird Vinylacetat gepfropft. Insbesondere bei der erfindungsgemäß erforderlichen Teil- oder Vollverseifung der Pfropfpolymerisate im Anschluß an die Pfropfpolymerisation ist bei der Pfropfung neben Vinylacetat die Mitverwendung von Vinylpropionat vorteilhaft. Außerdem lassen sich copolymerisierbare Gemische aus Vinylcarbonsäureestern pfropfen, vorzugsweise Gemische aus Vinylacetat und Versaticsäurevinylester, wobei der Versaticsäurevinylesteranteil 0,2 bis 10 Gew.-%, vorzugsweise 0,5 bis 5 Gew.-%, bezogen auf den Vinylacetatanteil, betragen kann. Auch die Pfropfung mit verschiedenen Vinylcarbonsäureestern in Form von Blockcopolymeren, gegebenenfalls in Kombination mit weiteren ethylenisch ungesättigten und copolymerisationsfähigen Monomeren, kann vorteilhaft sein.

Weiterhin können die Vinylcarbonsäureester auch zusammen mit anderen ethylenisch ungesättigten und copolymerisierbaren Monomeren, wie z. B. Maleinsäure, Itaconsäure, Mesaconsäure, Crotonsäure, Acrylsäure oder deren Estern, gepfropft werden.

Die Pfropfung wird unter Verwendung von Radikalketten startenden Pfropfkatalysatoren durchgeführt, wobei hierfür vorzugsweise alle in den Monomeren, der Monomerenmischung bzw. der Monomerenlösung löslichen Radikalbildner in Betracht kommen können. Insbesondere organische Per-Verbindungen, wie Peroxide und Percarbonate, sowie organische Azo-Verbindungen haben sich für die Pfropfung bewährt, bevorzugt wird Azo-bis-isobutyronitril, tert.-Butylperoxy-2-ethylhexanoat und besonders bevorzugt Dibenzoylperoxid verwendet. Die Pfropfreaktion wird in Gegenwart von vorzugsweise 0,013 bis 1,3 Mol-%, insbesondere 0,026 bis 0,27 Mol-%, Radikale bildendem Katalysator, bezogen auf die Monomerenmenge, durchgeführt.

Die erhaltenen Pfropfpolymerisate lassen sich durch Hydrolyse, Alkoholyse oder Umesterung in teil- oder vollverseifte Produkte überführen, wobei der Hydrolysegrad mindestens 50 Mol-%, vorzugsweise mehr als 70 Mol-%, insbesondere 85 bis 99 Mol-%, bezogen auf die Molzahl der aufgepfropften Monomereinheiten im Propfpolymerisat, beträgt.

Die Pfropfreaktion kann z. B. in Emulsion oder in Suspension erfolgen, bevorzugt wird sie aber in Lösung oder in Substanz durchgeführt.

Die zu pfropfenden Monomeren werden vorzugsweise der im Reaktionsgefäß vorgelegten Polyurethanpfropfgrundlage kontinuierlich oder diskontinuierlich zudosiert, wobei es vorteilhaft ist, die Dosiergeschwindigkeit und die Verfahrensparameter so zu wählen, daß die Bildung von nicht gepfropften Homopolymerisaten weitestgehend ausgeschlossen ist. Die Monomeren können, soweit sie in flüssiger Form vorliegen, in Substanz oder auch als Lösung zugesetzt werden. Der Katalysator wird bevorzugt in der Monomerenflüssigkeit bzw. der Monomerenlösung gelöst und zusammen mit dieser zudosiert. Er kann aber auch im Reaktionsgefäß zusammen mit der Polyurethanpfropfgrundlage, zumindest teilweise, vorgelegt werden. Die Pfropfreaktion wird in Abhängigkeit vom eingesetzten Katalysator und, speziell bei der Substanzpolymerisation, in Abhängigkeit von der eingesetzten Polyurethanpfropfgrundlage vorzugsweise bei Temperaturen zwischen 40 und 120°C, insbesondere zwischen 65 und 100°C, durchgeführt.
Alternativ ist auch Batch-Pfropfpolymerisation möglich, wobei jedoch dieses Verfahren häufig zu Gemischen aus Pfropfpolymerisaten und Homopolymerisaten aus den zu pfropfenden Monomeren führen kann.

Die bei der Pfropfpolymerisation auftretende Viskositätserhöhung des Reaktionsgemisches, insbesondere bei der Substanzpolymerisation, kann häufig zu Verarbeitungsproblemen führen, die z. B. durch kontinuierlichen oder diskontinuierlichen Zusatz von Lösungsmitteln umgangen werden können. Als Lösungsmittel eignen sich vorzugsweise monofunktionelle Alkohole, insbesondere Methanol und Ethanol, die gegebenenfalls auch bereits für das Lösen der zu pfropfenden Monomeren eingesetzt werden können.

Bei der Lösungspolymerisation sollte der Lösungsmittelanteil in dem Reaktionsgemisch vorzugsweise unter 20 Gew.-%, insbesondere unter 10 Gew.-%, bezogen auf das Reaktionsgemisch, liegen.

Die erhaltenen Pfropfpolymerisate lassen sich nach Entfernen der Restmonomeren (meist durch azeotrope Destillation mit Methanol) durch Eintragen der Mischung in Wasser in ihrer unverseiften Form ausfällen. Sie können aber auch nach Verdünnung mit einem Lösungsmittel, vorzugsweise mit Methanol, mittels saurer Katalysatoren (z.B. Salzsäure, Phosphorsäure, p-Toluolsulfonsäure etc.) oder aber vorzugsweise unter Verwendung alkalischer Katalysatoren (z. B. NaOH, KOH, NaOCH₃, KOCH₃, etc.), gegebenenfalls unter Mitverwendung von Wasser, nach üblichen literaturbekannten Verfahren in die gewünschten Teil- bzw. vollverseiften Produkte übergeführt werden.

Bevorzugt beträgt der Alkalihydroxid-Zusatz 0,1 bis 20 Mol-%, insbesondere 0,5 bis 10 Mol-%, bezogen auf die aufgepfropfte und verseifbare Monomereinheitenmenge. Die Verseifung wird vorzugsweise zwischen 20 und 60°C durchgeführt, und zwar insbesondere durch alkalische Alkoholyse in niederem Alkanol, vorzugsweise in Methanol.

Enthalten die Pfropfpolymerisate neben den aufgepfropften Vinylestereinheiten noch weitere Comonomereinheiten aus ethylenisch ungesättigten Monomeren, die verseifbar sind, so können auch diese bei der Verseifungsreaktion bzw. Alkoholyse hydrolysiert werden.

Es hat sich ferner gezeigt, daß in den Pfropfpolymerisaten die Vinylestereinheiten mit vorzugsweise 1 bis 4 C-Atomen im Carbonsäurerest sich besonders gut alkalisch verseifen bzw. alkoholytisch spalten lassen, während Vinylestereinheiten mit längerkettigen Carbonsäureresten, vorzugsweise mit längerkettigen verzweigten Carbonsäureresten, gegen alkalische Verseifung bzw. alkalische Alkoholyse beständiger sind, was für die Herstellung einer Reihe von teilverseiften Pfropfpolymerisaten von Bedeutung sein kann.

Die relevanten Syntheseparameter bzw. Synthesevarianten und Verseifungsgrade sind jeweils so zu wählen und aufeinander abzustimmen, daß stets wasserlösliche Pfropfpolymerisate erhalten werden, da die Wasserlöslichkeit u.a. ein wichtiges Eigenschaftsmerkmal für die erfindungsgemäße Verwendbarkeit der Pfropfpolymerisate als Schutzkolloide, z. B. bei der Emulsionspolymerisation, darstellt.

Die erfindungsgemäßen organischen Dispersionspolymerisate auf der Basis von ethylenisch ungesättigten und polymerisationsfähigen bzw. copolymerisationsfähigen Monomeren, die in Gegenwart von Schutzkolloiden oder von Schutzkolloiden und Emulgatoren durch radikalisch initiierte Emulsions-, Suspensions- oder Perl-Polymerisation bzw. -Copolymerisation in wäßrigem Medium hergestellt wurden und in wäßriger Dispersionsform oder in feindisperser trockener Pulverform vorliegen, sind ferner dadurch gekennzeichnet, daß sie außer den vorstehend als Schutzkolloide beschriebenen erfindungsgemäßen wasserlöslichen und Vinylalkoholeinheiten auf einer Polyurethanpfropfgrundlage enthaltenden Pfropfpolymerisaten noch weitere polymere Bestandteile aufweisen, die als Monomereinheiten, bezogen auf die polymeren Bestandteile,
a) 15 bis 100 Gew.-%, vorzugsweise 25 bis 99 Gew.-%, insbesondere 45 bis 98 Gew.-%, Verbindungen aus der Gruppe der Vinylester, (Meth-)Acrylester, Maleinsäure-/Fumarsäureester, Itakonsäureester, Crotonsäureester, Vinylaromaten, α-Olefine, ethylenisch ungesättigten Nitrile, Vinylhalogenide, Vinylidenhalogenide, und
b) 0 bis 60 Gew.-%, vorzugsweise 0,5 bis 30 Gew.-%, insbesondere 1 bis 10 Gew.-%, Verbindungen aus der Gruppe ethylenisch ungesättigter (C₃-C₅)-Monocarbonsäuren, ethylenisch ungesättigter (C₄-C₆)-Dicarbonsäuren oder deren Halbestern mit aliphatischen und gegebenenfalls substituierten (C₁-C₈)-Alkoholen, ethylenisch ungesättigter Sulfosäuren oder Phosphonsäuren oder Salze dieser Säuren, Hydroxy-(C₂-C₁₈)alkylacrylate, Hydroxy-(C₂-C₁₈)alkylmethacrylate, Hydroxy-(C₂-C₁₈)alkyl- oder Di[hydroxy-(C₂-C₁₈)alkyl]-maleinate bzw. -fumarate, Hydroxy-(C₂-C₁₈)alkylcrotonate, Mono- oder Di-[hydroxy-(C₂-C₁₈)alkyl]itakonate, Monoester oder Diester von Polyalkylenglykoläthern mit ethylenisch ungesättigten (C₃-C₅)-Monocarbonsäuren bzw. ethylenisch ungesättigten (C₄-C₆)-Dicarbonsäuren, wobei die endständigen OH-Gruppen der Polyalkylenglykolätherreste auch veräthert oder verestert sein können, Amide von ethylenisch ungesättigten (C₃-C₆)-Mono- oder -Dicarbonsäuren, die am Amidstickstoff durch Reste mit 1 bis 7 C-Atomen oder Methylol- oder (C₁-C₁₈)-Alkoxymethylenreste substituiert sein können, ethylenisch ungesättigter Urethane bzw. Harnstoffe bzw. Silane, und
c) 0 bis 60 Gew.-%, vorzugsweise 0,5 bis 30 Gew.-%, insbesondere 1 bis 10 Gew.-%, ethylenisch ungesättigte primäre, sekundäre, tertiäre Amine bzw. quaternäre Ammoniumverbindungen aus der Gruppe der Amino-(C₁-C₂₄)alkylenacrylsäureester bzw. -methacrylsäureester, ihrer Mono-(C₁-C₂₄)alkylamino- bzw. Di[(C₁-C₂₄)alkyl]aminoderivate bzw. ihrer durch (C₁-C₂₄)-Alkylierung erhaltenen quaternären Ammoniumsalze bzw. ihrer quaternären Mono- bzw. Diallylammoniumderivate, und
d) 0 bis 5 Gew.-% mehrfach ethylenisch ungesättigte Verbindungen und/oder weitere Reaktivgruppen enthaltende einfach oder mehrfach ethylenisch ungesättigte Verbindungen, und
e) 0 bis 5 Gew.-% Molekulargewichtsregler aus der Gruppe Dodecylmercaptan, Tetrachlorkohlenstoff, Bromtrichlormethan, Tetrakismercaptoacetylpentaerythrit, Thioglykolsäure,
enthalten.

Von den vorstehend unter a) bis e) aufgeführten Monomereinheiten kommen vorzugsweise folgende Monomeren zur Anwendung.

Bevorzugte Monomere zu a) sind Vinylester von (C₁-C₁₈)-Carbonsäuren, wie z. B. Vinylacetat, Vinylpropionat, Vinylversatat, Vinyllaurat, Vinylstearat, ferner Acrylsäure- und Methacrylsäureester von aliphatischen, geradkettigen oder verzweigten (C₁-C₂₂)-Alkoholen, in denen die Wasserstoffatome im Alkoholrest ganz oder teilweise durch andere Atome, wie z.B. Fluor- oder Chloratome, oder durch aromatische Reste ersetzt sein können, wie z. B. Methylmethacrylat, Butylmethacrylat, Oktylmethacrylat, Ethylacrylat, Isobutylacrylat, 2-Ethylhexylacrylat, Behenylacrylat, 2-Phenylethylacrylat, Hexafluorbutylmethacrylat, Tetrafluorpropylmethacrylat, Dodecafluoroktylacrylat, ferner Crotonsäureester von (C₁-C₈)-Alkoholen, wie z. B. Methylcrotonat, 2-Ethylhexylcrotonat, ferner Malein-, Fumar- oder Itakonsäureester mit (C₁-C₈)-Alkoholen, wie z.B. Dimethylmaleinat, Dibutylmaleinat, Dioktylmaleinat, Dibutylfumarat, Dimethylitakonat, ferner Monoacrylsäureester bzw. Monomethacrylsäureester von Diolen oder Triolen, die teilweise veräthert sein können, wie Ethylenglykol, Butan-1,4-diol, Hexan-1,6-diol, Glyzerin, Trimethylolpropan, Ethylenglykolmonomethyläther, ferner vinylaromatische Verbindungen, wie z. B. Styrol, Vinyltoluol, α-Methylstyrol, ferner α-Olefine, wie z. B. Ethylen, ferner α,β-ethylenisch ungesättigte Nitrile, wie z. B. Cyanethylmethacrylat, Acrylnitril oder Methacrylnitril, ferner Vinyl- oder Vinylidenhalogenide, wie z. B. Vinylchlorid, Vinylidenchlorid, ferner Gemische aus den genannten Monomeren.

Bevorzugte Monomere zu b) sind Crotonsäure, Maleinsäure, Fumarsäure, Itakonsäure, Acrylsäure, Methacrylsäure, Malein-, Fumar- u. Itakonsäurehalbester von verzweigten oder geradkettigen (C₁-C₈)-Alkoholen, deren Wasserstoffatome im Alkoholrest ganz oder teilweise durch Halogenatome ersetzt sein können, oder Gemische aus diesen Monomeren, ferner Vinylsulfonsäure, Acrylamidomethylpropan-sulfonsäure oder -phosphonsäure, Styrolsulfonsäure, Acrylsäure- oder Methacrylsäure-(1-propylsulfonsäure-3)-ester sowie deren Alkali- oder Ammoniumsalze, ferner Ester von Polyalkylenglykolen, die 2 bis 50 Alkylenoxideinheiten im Polyalkylenglykolrest besitzen, mit Acrylsäure, Methacrylsäure, Crotonsäure, Maleinsäure bzw. Fumarsäure oder mit ungesättigten (C₅-C₆)-Dicarbonsäuren, z. B. Polyethylenglykolcrotonat, wobei die endständige OH-Gruppe des Polyalkylenglykolrestes auch veräthert oder verestert sein kann, ferner α,β-ethylenisch ungesättigte Carbonsäureamide, wie z. B. Vinylacetamid, Acrylamid, Methacrylamid, N-Methylacrylamid, N,N-Dimethylacrylamid, N-Cylohexylmethacrylamid, N-Benzylmethacrylamid, N-(3-Hydroxy-2,2-dimethylpropyl-)methacrylamid, N-Methylolacrylamid, N-Dimethylol-methacrylamid, N-Methoxymethyl-methacrylamid, N-Butoxymethylacrylamid, oder Vinylpyrrolidon, ferner α,β-ethylenisch ungesättigte Urethane oder Harnstoffe, wie z. B. Allyl-1-(2-aminoethyl)-ethylenureidocarbamat, N-Methylcarbamidoethylmethacrylat, N-Butylcarbamidoisopropylmethacrylat, N-Oktadecylcarbamidoethylacrylat, N-Phenylcarbamidoethylmethacrylat, N-Cyclohexylcarbamidoethylacrylat, 2-Methacryloylethylharnstoff, 2-Oktylmethacryloylethylharnstoff, 2-Phenylmethacryloylethylharnstoff, ferner α,β-ethylenisch ungesättigte Silane, wie z. B. Vinyltrimethoxysilan, Vinyltriethoxysilan, Methacryloxypropyltrimethoxysilan, Methacryloxypropyltris(methoxyethoxy)-silan, Vinyltris(methoxyethoxy)silan, Vinyltriacetoxysilan.

Bevorzugte Monomere zu c) sind Dimethylaminoethylmethacrylat, Dimethylaminoneopentylacrylat, Dimethylaminopropylmethacrylat, Aminoethylmethacrylat, 2-N-Morpholinoethylacrylat, t-Butylaminoethylmethacrylat, 4-Methacrylamido-2,2,6,6-tetramethylpiperidin, Trimethylammoniumethyl-(meth-)acrylatchlorid, β-Acetamido-diethyl-aminoethyl(meth-)acrylat-chlorid, Trimethylammoniumpropylacrylatchlorid bzw. -methacrylatchlorid, Trimethylammoniumethylacrylatbromid bzw. -methacrylatbromid, Trimethylammoniumneopentylmethacrylatchlorid bzw. -acrylatchlorid, Diallyldimethylammoniumchlorid, Diallyl-butyl-methyl-ammonium-bromid.

Bevorzugte Monomere zu d) sind Divinylbenzol, Diallylphthalat, Butandioldiacrylat bzw. -dimethacrylat, Ethandioldimethacrylat, Hexandioldimethacrylat, Ethandioldiacrylat, Hexandioldiacrylat, Pentaerythritoltriacrylat, Trimethylolpropantriacrylat, Tetraethylenglykoldiacrylat, Tripropylenglykoldiacrylat, Trimethylolpropantrimethacrylat, Triallylcyanurat, Isocyanatoethylmethacrylat.

Bevorzugte Monomere zu e) sind Dodecylmercaptan, Tetrachlorkohlenstoff, Tetrakismercaptoacetylpentaerythrit.

Ein aus erfindungsgemäßen Komponenten aufgebautes Dispersionspolymerisat kann zum Beispiel durch übliche, radikalisch initiierte Emulsions-, Suspensions- oder Perlpolymerisation hergestellt werden, wobei der Feststoffgehalt der resultierenden Dispersion vorzugsweise zwischen 5 und 70 Gew.-% liegt. Bevorzugtes Herstellungsverfahren ist die Emulsionspolymerisation, wobei das erfindungsgemäße Schutzkolloid bevorzugt insgesamt in der wäßrigen Phase vorliegt.

Bei der Emulsionspolymerisation kann nach üblichen Methoden verfahren werden, d.h. es können die üblichen ionogenen und nichtionogenen Emulgatoren zur Emulgierung der Monomeren und zur Stabilisierung des resultierenden Latex eingesetzt werden. Als anionische Emulgatoren kommen z. B. infrage: Alkylsulfate, Alkylarylalkoxysulfate, Alkylarylsulfonate, Alkali- und/oder Ammoniumsalze von Alkyl- bzw. Alkylaryl-polyglykolethersulfaten, als nichtionogene Emulgatoren kommen z. B. infrage: oxethylierte Fettalkohole oder oxethylierte Alkylphenole, aber auch Blockcopolymerisate aus Ethylenoxid u. Propylenoxid. Eine weitere Emulgatorklasse sind kationische Tenside, wie z. B. primäre, sekundäre oder tertiäre Fettamine oder Fettaminoxethylate in Kombination mit organischen oder anorganischen Säuren, ferner quaternäre Alkylammoniumverbindungen. Es lassen sich auch amphotere Tenside mit zwitterionischer Struktur, wie z. B. Alkylamidopropylbetaine, einsetzen.

Die einzusetzende Emulgatormenge beträgt im allgemeinen 0,01 bis 10 Gew.-%, vorzugsweise 0,1 bis 5 Gew.-%, bezogen auf das Gesamtmonomerengewicht.

Die Auswahl von Emulgatoren bzw. von Emulgatorkombinationen richtet sich nach dem gewünschten Ladungscharakter des zu bildenden Latex, der entweder negativ oder positiv sein kann. Keinesfalls dürfen die Tenside unverträglich miteinander oder mit ionischen funktionellen Gruppen von Comonomeren sein, was die Stabilität der Dispersion stören würde und zum Ausfällen der Latexteilchen führen könnte.

Erfindungsgemäß wichtig ist die Verwendung der oben beschriebenen wasserlöslichen und Vinylalkoholeinheiten auf Polyurethanpfropfgrundlagen enthaltenden Pfropfpolymerisate als Schutzkolloide bei der Herstellung der erfindungsgemäßen Dispersionspolymerisate durch radikalisch initiierte Polymerisation in wäßrigem Medium. Diese Pfropfpolymerisate sind im allgemeinen sehr gut wasserlöslich und ergeben klare wäßrige Lösungen. Sie können z. B. bei der Emulsionspolymerisation, je nach Polymerisationsverfahren - Zudosierung, Voremulsion, Batch - in Wasser gelöst in der wäßrigen Flotte insgesamt oder teilweise vorliegen bzw. zur Stabilisierung der Voremulsion allein oder gegebenenfalls in Kombination mit anderen Schutzkolloiden oder Tensiden verwendet werden. Bei nur teilweisem Vorliegen kann der Rest gleich- oder ungleichmäßig parallel zum Monomeren als wäßrige Lösung zudosiert werden. Mitunter kann es auch zweckmäßig sein, die wäßrige Pfropfpolymerisatlösung stark verzögert, d.h. sehr viel später nach Polymerisationsbeginn zuzudosieren. In solchen Fällen muß die Stabilität der entstehenden Dispersion durch die Menge an vorhandenem Emulgator und/oder anderen Schutzkolloiden bzw. an Schutzkolloidfunktion ausübenden Comonomeren gewährleistet sein. Falls auf andere Stabilisatoren verzichtet werden kann oder soll, muß der Einfluß des Pfropfpolymerisats insbesondere im Hinblick auf anwendungstechnische Eigenschaften des zu bildenden Dispersionspolymerisats, wie z. B. Viskosität der Dispersion, Glanz, Haftung, Verlauf, Pigmentbindevermögen, Weißanlaufen u. Wasser- bzw. Verseifungsbeständigkeit des Films und Korrosionsverhalten, z. B. auf Metallen, berücksichtigt werden.
Sollte der Einsatz weiterer wasserlöslicher Polymerer als Schutzkolloide zweckmäßig oder wünschenswert sein, so können in solchen Fällen zusätzlich nichtionische, kationische oder anionische Schutzkolloide mitverwendet werden. Dazu gehören z. B. Polyvinylalkohol, der kationisch modifiziert sein kann, Polysaccharide (lösliche Stärke), Zelluloseäther, Carboxymethylzellulose, Polyacrylsäure, Pektine, Alginate, Polyvinylpyrrolidone, Polypeptide, Gelatine, Agar, Chitosan oder lösliche Copolymerisate mit funktionellen Gruppen, einzeln oder in Kombination, sofern sie, gegebenenfalls wegen ihrer Ladung, durch Einwirkung auf andere Dispersionsbestandteile nicht stören. Der Anteil solcher zusätzlicher Schutzkolloide kann 0,05 bis 10 Gew.-%, vorzugsweise 0,1 bis 4 Gew.-%, bezogen auf das Dispersionspolymerisat, betragen.

Weiterer Gegenstand der Erfindung ist auch ein Verfahren zur Herstellung der oben beschriebenen organischen Dispersionspolymerisate aus ethylenisch ungesättigten, polymerisationfähigen bzw. copolymerisationsfähigen Monomeren durch radikalisch initiierte Emulsions-, Suspensions- oder Perl-Polymerisation bzw. -Copolymerisation in wäßrigem Medium in Gegenwart von Schutzkolloiden oder von Schutzkolloiden und Emulgatoren und Gewinnung der Dispersionspolymerisate in wäßriger Dispersionsform oder in feindisperser trockener Pulverform, erhalten aus der wäßrigen Dispersionsform durch Eliminierung der wäßrigen Phase, dadurch gekennzeichtnet, daß man bei der Polymerisation als Schutzkolloid in der wäßrigen Phase wasserlösliche und Vinylalkoholeinheiten auf einer Polyurethanpfropfgrundlage enthaltende Pfropfpolymerisate, vorzugsweise in einer Menge von 0,01 bis 20 Gew.-%, insbesondere 0,1 bis 10 Gew.-%, besonders bevorzugt 0,5 bis 6 Gew.-%, bezogen auf die gesamte Monomerenmenge, verwendet. Das Schutzkolloid kann auch in einer Menge von 0,01 bis 20 Gew.-%, bezogen auf das Dispersionspolymerisat, eingesetzt werden.

Eine besonders bevorzugte Verfahrensvariante ist die Emulsionspolymerisation. Die erfindungsgemäß erhaltenen wäßrigen Polymerisatdispersionen besitzen Feststoffgehalte von vorzugsweise 5 bis 70 Gew.-%, insbesondere 10 bis 60 Gew.-%, besonders bevorzugt 25 bis 55 Gew.-%, bezogen auf die wäßrige Dispersion.

Die Dispersionspolymerisate können aus ihren wäßrigen Dispersionen in wasserfreier Pulverform gewonnen werden, indem man den wäßrigen Dispersionen den Wasseranteil entzieht, z. B. durch Sprühtrocknung oder durch Ausfällen des Polymerisatanteils und Filtration.

Bei der Auswahl der in dem erfindungsgemäßen Polymerisationsverfahren zu verwendenden polymerisationfähigen bzw. copolymerisationsfähigen Monomeren, wie sie bereits oben insbesondere unter a) bis e) beschrieben worden sind, sollten insbesondere hinsichtlich der Art und der Mengenverhältnisse von Comonomeren u.a. folgende Gesichtspunkte Beachtung finden.

Es muß bei den jeweils zu verwendenden Comonomeren einerseits eine Copolymerisation dieser Monomeren untereinander prinzipiell möglich sein und andererseits muß sie unter den einzuhaltenden Verfahrensbedingungen auch tatsächlich erfolgen können.

Im einfachsten Fall läßt sich dies unter Zuhilfenahme der Copolymerisationsparameter bzw. der Q- und e-Werte der Monomeren abschätzen (vgl. z. B. Brandrup, Immergut, Polymer Handbook, 2nd ed. (1975), John Wiley & Sons, New York). Unter Umständen muß bei der Wahl bestimmter Comonomerer das Monomerenmischungsverhältnis danach ausgewählt werden, wie eine Copolymerisation durch Variation des Syntheseverfahrens und u.a. speziell der Art und Weise der Monomerendosierung möglich ist. So können sich gegebenenfalls Copolymerisationen in manchen Fällen dadurch erzwingen lassen, daß man eine oder mehrere Monomerkomponenten vorlegt und das übrige Monomere bzw. die übrige Monomermischung erst im Verlauf der Polymerisation zudosiert. Im Falle der Emulsionscopolymerisation kann es in diesem Zusammenhang von entscheidender Bedeutung sein, ob Monomere in Substanz oder als wäßrige Emulsion zudosiert werden. Analoges gilt hierbei auch für die Art der Emulgatorzugabe. Es können z. B. erhebliche Unterschiede hinsichtlich der Teilchengröße, der Teilchengrößenverteilung und der Stabilität der Copolymerisatdispersion beobachtet werden in Abhängigkeit davon, ob der Emulgator vorgelegt wurde oder ob er während der Copolymerisation zudosiert worden ist.

Die Auswahl der Monomeren bzw. ihrer Mischungsverhältnisse richtet sich im übrigen nach den gewünschten anwendungstechnischen Eigenschaften der Dispersionen bzw. der Dispersionspolymerisate, wobei zu deren Einstellung die dem Fachmann bekannten Auswahlkriterien Geltung finden können.

Bei Verwendung erfindungsgemäßer Dispersionspolymerisate in Form ihrer wäßrigen Dispersionen sollte deren minimale Filmbildungstemperatur (MFT) unterhalb oder im Bereich der vorgesehenen Anwendungstemperatur liegen, d.h. vorzugsweise zwischen 0 und 80°C, insbesondere zwischen 0 und 40°C.

Werden Dispersionspolymerisate mit härterer Einstellung, d.h. solche, die höhere Glastemperaturen (T_{G}) aufweisen, verwendet, so können zum Erreichen der erforderlichen MFT übliche Filmbildehilfsmittel oder äußere Weichmacher mitverwendet werden. Ist die nicht erwünscht, so sollte die MFT besonders bevorzugt im Bereich zwischen 0 und 25°C liegen.

Folgende Monomerkombinationen eignen sich ganz besonders in den angegebenen Gewichtsverhältnissen (GT = Gewichtsteile) zur Herstellung erfindungsgemäßer Dispersionspolymerisate, z. B. durch Emulsionspolymerisation, unter Mitverwendung erfindungsgemäßer Pfropfpolymerisate als Schutzkolloid:

| | |
|---|---|
| Butylacrylat/Methylmethacrylat | 10 - 90 GT/90 - 10 GT |
| Butylacrylat/Styrol | 10 - 90 GT/90 - 10 GT |
| Oktylacrylat/Methylmethacrylat | 5 - 80 GT/95 - 20 GT |
| Oktylacrylat/Styrol | 5 - 80 GT/95 - 20 GT |
| Vinylacetat/Butylacrylat | 40 - 80 GT/60 - 20 GT |
| Vinylacetat/Vinylversatat | 50 - 80 GT/50 - 20 GT |

Zur Auslösung der Polymerisation können alle z. B. in der Emulsionspolymerisation üblichen, vorzugsweise wasserlöslichen, und Radikalketten initiierenden Systeme, die teilweise anionische Verbindungen umfassen, in Mengen von 0,01 bis 2 Gew.-%, bezogen auf die Gesamtmonomermenge, Verwendung finden, wie z. B. 2,2′-Azobis(2-amidinopropan)-dihydrochlorid, 2,2′-Azobis(N,N′-dimethylenisobutyramidin)-dihydrochlorid, 4,4′-Azobis(4-cyanovaleriansäure), H₂O₂, t-Butylhydroperoxid, Persulfate, wie z. B. Ammoniumpersulfat, Natriumpersulfat, Kaliumpersulfat, Redox-Systeme, wie z. B. H₂O₂/Ascorbinsäure - letzteres System vor allem zur Senkung des Restmonomerengehaltes in der Nachreaktionsphase der Polymerisation - sowie energiereiche Strahlung und übliche Photoinitiatoren.

Einer der Vorteile der erfindungsgemäßen Pfropfpolymerisate besteht vor allem u.a. darin, daß sie sich als Schutzkolloide zur Herstellung von Emulsionspolymerisaten verwenden lassen, ohne daß weitere Stabilisatoren eingesetzt werden müssen, was sich insbesondere sehr vorteilhaft bei der Herstellung von stabilen Reinacrylat-u. Styrol/Acrylestercopolymer-Dispersionen auswirkt, und dabei außerdem die daraus erhältlichen Dispersionspolymerisatfilme eine deutlich bessere Haftung an den meisten festen Substraten, wie z. B. Metallen, Kunststoffen sowie mineralischen oder pflanzlichen Oberflächen, vergleichsweise zu solchen analogen Dispersionspolymerisatfilmen mit Gehalten an bekannten Schutzkolloiden, zeigen. Außerdem kann es bei geeignetem Polymeraufbau des erfindungsgemäßen Pfropfpolymerisats nach der Beschichtung von Substraten mit dem Dispersionspolymerisat u. nachfolgender Trocknung bei 50 bis 150°C, vorzugsweise 80 bis 190°C, zu einer Vernetzung mit in dem Dispersionspolymerisat gegebenenfalls noch vorhandenen anderen funktionellen Gruppen, und damit zu einer Härtung der Dispersionspolymerisatbeschichtung, kommen.

Die erfindungsgemäß erhaltenen Dispersionspolymerisate können sowohl in Substanz als auch vorzugsweise in Form ihrer wäßrigen Dispersionen oder gelöst in organischen Lösungsmitteln für eine Reihe verschiedener Einsatzgebiete in sehr vorteilhafter Weise verwendet werden. Bevorzugt sind die erfindungsgemäßen Produkte als Beschichtungsmasse für feste Substrate, insbesondere als nicht korrodierend wirkende Grundierungsmasse für Metalle, in der Bauindustrie als Bindemittel bei der Herstellung von Beton, Mörtel, Putz und Anstrichen, als Ausgangsmaterial für die Herstellung von Filmen, Folien, Fasern, Klebstoffen, Lacken, Pressmassen und Formkörpern, als Verdicker in flüssigen Zubereitungen, als Imprägniermittel für poröse Substrate, ferner auch als Hilfsstoffe zum Verkleben von Leder, Textilien, Papier sowie als Bindemittel bei der Papierherstellung, der Papierveredlung, der Textilimprägnierung, bei der Herstellung von Anstrichfarben sowie in der Baustoffindustrie verwendbar.

Die Erfindung wird durch die nachstehenden Beispiele näher erläutert.

### Beispiel 1

Herstellung eines wasserlöslichen und Vinylalkoholeinheiten auf einer Polyurethanpfropfgrundlage enthaltendes Pfropfpolymerisat.
A) Herstellung einer Polyurethanpfropfgrundlage
   In einem Reaktionsgefäß mit Rührwerk werden unter Stickstoffatmosphäre die Diolkomponente, bestehend aus einer Mischung von Polyethylenglykol vom Molekulargewicht 1500 (= PEG 1500) und 1,4-Butandiol (= 1,4-Bu) im Molverhältnis PEG 1500 : 1,4-Bu = 1:0,43 , und der Katalysator, bestehend aus 1,4-Dimethylpiperazin in einer Menge von 0,48 Mol-%, bezogen auf die Molmenge des eingesetzten Diisocyanats, vorgelegt und das Gemisch auf eine Reaktionstemperatur von 72°C erwärmt. Die Diisocyanatkomponente, bestehend aus 0,9 mol Isophorondiisocyanat pro mol Diolkomponentengemisch, wird anschließend so zudosiert, daß die Temperatur des Reaktionsgemisches 100°C nicht überschreitet. Nach vollständiger Zudosierung der Diisocyanatkomponente wird zur Vervollständigung der Reaktion eine Nachreaktionszeit von ca. 2 Stunden bei ca. 80 bis 100°C unter Rühren und Stickstoffatmosphäre angeschlossen.
   Die Vollständigkeit des Umsatzes und damit das Ende der Reaktion kann durch Analyse der Diisocyanatkonzentration nach üblichen literaturbekannten Methoden (z. B. IR-Spektroskopie, Titration) ermittelt werden.
   Das Molverhältnis von Diolkomponente zu Diisocyanatkomponente beträgt 1 : 0,9 und das daraus berechnete Molekulargewicht des resultierenden Polyurethans (= Polyurethanpfropfgrundlage) beträgt 12770.
B) Herstellung eines Polyvinylacetat-Pfropfpolymeren auf einer Polyurethanpfropfgrundlage
   Von der in Beispiel 1A) erhaltenen Polyurethanpfropfgrundlage werden 1428 g in einem Reaktionsgefäß unter Stickstoffatmosphäre auf eine Temperatur von 72°C erwärmt. Das zu pfropfende monomere Vinylacetat wird, zusammen mit dem radikalischen Initiator, im vorliegenden Fall 0,2 Mol-% Dibenzoylperoxid, bezogen auf die Molmenge des eingesetzten monomeren Vinylacetats, in Methanol gelöst und das Gemisch so langsam zu der Polyurethanpfropfgrundlage dosiert, daß eine Bildung von nicht gepfropftem Vinylacetat-Homopolymerisat weitestgehend unterbleibt. Die Temperatur der reaktiven Polymerisationsmasse sollte 120°C, vorzugsweise 100°C, nicht überschreiten. Die Zudosierzeit beträgt 420 Minuten und die Nachreaktionszeit beträgt 45 Minuten. Es werden pro g Polyurethanpfropfgrundlage 3,5 g monomeres Vinylacetat verwendet.
   Nach Beendigung der Nachreaktion wird gegebenenfalls überschüssiges Restmonomeres durch azeotrope Destillation mit Methanol entfernt.
   Das resultierende Polyvinylacetatpfropfpolymerisat enthält 77,1 Gew.-% gepfropftes, Polyvinylacetat und zeigt eine Grenzviskositätszahl [η] von 18,8 mPa·s, gemessen in Tetrahydrofuranlösung bei 25°C im Ostwaldviskosimeter. Das aus dem Umsatz rechnerisch ermittelte Molekulargewicht des Pfropfpolymerisats beträgt 55750 g/mol.
C) Herstellung eines wasserlöslichen und Vinylalkoholeinheiten auf einer Polyurethanpfropfgrundlage enthaltenden Pfropfpolymerisats, verwendbar als Schutzkolloid, z. B. bei der Emulsionspolymerisation
   Das in Beispiel 1B) erhaltene Pfropfpolymerisat wird in methanolischer Lösung umgeestert bzw. verseift. Hierzu wird das Pfropfpolymerisat zu einer 50 Gew.-% Feststoff enthaltenden methanolischen Lösung gelöst und mit 4,95 Mol-% NaOH, bezogen auf die Molmenge der in dem Pfropfpolymerisat enthaltenen aufgepfropften Vinylacetateinheiten, in 10 gew.-%iger methanolischer Lösung, bei Raumtemperatur versetzt.
   Nach 11 Minuten Reaktionszeit bei Raumtemperatur tritt in der Reaktionsmasse Gelbildung auf und nach 45 Minuten Reaktionszeit ist die Verseifungsreaktion beendet. Das erhaltene gelförmige Verseifungsprodukt wird in einer üblichen Mühle granuliert, das Granulat mit Methanol unter Zusatz von Essigsäure bis zur neutralen pH-Wertreaktion gewaschen und getrocknet. Der Hydrolysegrad des erhaltenen wasserlöslichen Verseifungsproduktes beträgt 98,7 Mol-%. Sein Gehalt an Vinylalkoholeinheiten beträgt 62,0 Gew.-%. Es kann ohne weitere Reinigung erfindungsgemäß als Schutzkolloid verwendet werden.

### Beispiel 2

In einem 2 l Dreihalskolben mit Rührer, Rückflußkühler und Innenthermometer werden in 570,7 g entsalztem Wasser (E-wasser) 18 g oxethyliertes Nonylphenol, 0,9 g Na-Ethensulfonat, 2,5 g Na-Acetat·3 H₂O, 12 g des nach Beispiel 1C) erhaltenen erfindungsgemäßen Schutzkolloids sowie 3 g einer Hydroxyethylzellulose (molarer Substitutionsgrad 2, Durchschnittspolymerisationsgrad 400) gelöst. Man gibt 45 g einer Mischung aus 485 g Vinylacetat und 115 g Vinylversatat hinzu und heizt langsam auf 80°C auf, wobei man bei 50°C 1,2 g Ammoniumpersulfat in 30 ml E-Wasser zusetzt. Ab 70°C wird mit der Zudosierung des restlichen Monomerengemisches begonnen, die nach 2,5 Stunden beendet sein soll. Nachdem die Polymerisation weitere 15 Minuten bei 80°C erfolgte, wird die Temperatur anschließend auf 70°C erniedrigt. Man hält dann die Temperatur 1 Stunde bei 70°C und kühlt anschließend auf Raumtemperatur ab. Die fertige Dispersion ist lagerungsstabil. Sie hat einen Feststoffgehalt von 49,8 Gew.-% und eine MFT von 14°C.

### Beispiel 3

In einem 2 l Dreihalskolben mit Rührer, Rückflußkühler und Innenthermometer werden 1,15 g Na-Alkylpolyglykoläthersulfat (50 Gew.-%ig,wäßrig) und 0,32 g Ammoniumpersulfat in 309 g entsalztem Wasser (E-Wasser) gelöst (Vorlage). Anschließend stellt man eine Monomerenemulsion (Emulsion B) aus 357 g E-Wasser, 18,4 g Na-Alkylpolyglykoläthersulfat, 351 g Methylmethacrylat, 299 g Butylacrylat, 8,15 g Methacrylsäure, 4,9 g Acrylsäure, 1,3 g n-Dodecylmercaptan und 2,99 g Ammoniumpersulfat her. Ein Viertel dieser Monomerenemulsion wird mit 6,5 g WAM IV^{TM} (Hersteller: Fa. Air Products) versetzt (Emulsion A). Nach Zugabe von 40 g Emulsion A in die Vorlage wird diese auf 85°C geheizt, das Anspringen der Polymerisationsreaktion abgewartet, dann der Rest von Emulsion A und anschließend Emulsion B nacheinander innerhalb von 2,5 Stunden gleichmäßig zudosiert. Parallel zu den letzten 60 % der Emulsion B tropft man 3,25 g des nach Beispiel 1C) erhaltenen erfindungsgemäßen Schutzkolloids, gelöst in 50 g E-Wasser, zu. Nach dem Ende der Zudosierung wird 1 Stunde bei 85°C nachgeheizt und nach dem Abkühlen auf Raumtemperatur das Reaktionsgemisch mit 10 ml konz. wäßriger Ammoniaklösung versetzt. Man erhält eine stippenfreie und lagerungsstabile Dispersion mit einem Feststoffgehalt von 47,9 Gew.-% und einer MFT von 17°C.

### Beispiel 4

In einem 2 l Dreihalskolben mit Rührer, Rückflußkühler und Innenthermometer werden in 250,75 g E-Wasser 1,5 g oxethyliertes Nonylphenol und 0,75 g Ammoniumsalz eines sulfatierten Ethylenoxid-Propylenoxid-Blockcopolymeren gelöst. Man gibt 12 g einer Monomerenemulsion aus 168,8 g E-Wasser, 11,7 g oxethyliertem Nonylphenol, 6,8 g Ammoniumsalz eines sulfatierten Ethylenoxid-Propylenoxid-Blockcopolymeren, 22,0 g des nach Beispiel 1C) erhaltenen erfindungsgemäßen Schutzkolloids, 8,8 g Methylmethacrylat, 4,4 g Acrylamid, 273,6 g Styrol, 202,4 g Oktylacrylat, 8,8 g Methacrylsäure und 4,4 g Acrylsäure hinzu und heizt die Vorlage auf 85°C auf. Man startet die Polymerisation durch Zusatz von 0,31 g Ammoniumpersulfat (APS) in 2,6 g E-Wasser und dosiert nach 15 Minuten Vorpolymerisation die restliche Monomerenemulsion sowie, parallel dazu, 0,57 g APS, gelöst in 17,0 g E-Wasser, innerhalb von 4 Stunden bei einer Innentemperatur der Vorlage von 80 - 82°C ein. Nach Beendigung der Monomerenzugabe werden 0,13 g APS, gelöst in 2,6 g E-Wasser, zugesetzt und das Reaktionsgemisch 3 Stunden nachgeheizt. Dabei werden nach der ersten Stunde der Nachheizzeit 1,14 g APS, gelöst in 23,5 g E-Wasser, und 0,57 g Natriumdisulfit, gelöst in 23,5 g E-Wasser, getrennt gleichmäßig zudosiert. Nach Ablauf der Nachheizzeit läßt man auf Raumtemperatur abkühlen und stellt die Dispersion mit Ammoniaklösung auf pH 8 ein. Es wird ein lagerungsstabiler Latex mit 49,3 Gew.-% Feststoffgehalt und einer MFT von 12°C erhalten.

### Beispiel 5

In einem 2 l Dreihalskolben mit Rührer, Rückflußkühler und Innenthermometer wird eine Flotte aus 558,35 g E-Wasser, 216 g oxethyliertem (C₁₃)-Alkohol, 10,55 g Hydroxyethylzellulose (molarer Substitutionsgrad 2,5, Durchschnittspolymerisationsgrad 1500), 3 g Natriumacetat·3 H₂O, 3,6 g Natriumethensulfonat und 3,85 g des nach Beispiel 1C) erhaltenen erfindungsgemäßen Schutzkolloids hergestellt. Nach Zugabe von 60 g einer Monomerenmischung aus 576 g Vinylacetat und 144 g Butylacrylat wird die Vorlage auf 72°C aufgeheizt. Bei 65°C startet man die Polymerisation durch Zusatz von 1,44 g Natriumpersulfat (NaPS), gelöst in 38 g E-wasser, und beginnt bei 68°C mit der Zudosierung der restlichen Monomerenmischung, die 3,5 Stunden dauert. Nach Beendigung der Monomerenzugabe gibt man 0,72 g NaPS, gelöst in 18 g E-Wasser, hinzu und heizt 1 Stunde bei 72°C nach. Anschließend kühlt man die Dispersion ab und fügt bei 40°C 0,6 ml 30 %iges H₂O₂ und 0,36 g Ascorbinsäure, gelöst in 6 g E-Wasser, zu. Die resultierende fertige und lagerungsstabile Dispersion hat einen Feststoffgehalt von 53,6 Gew.-% und eine MFT von 5°C.

### Beispiel 6

In einem 2 l Dreihalskolben mit Rührer, Ruckflußkühler und Innenthermometer löst man 5,9 Natriumlaurylsulfat und 2,4 g eines oxethylierten Nonylphenols in 210 g E-Wasser. Nach der Zugabe von 57 g einer Monomerenemulsion aus 360,42 g E-Wasser, 12,75 g Natriumlaurylsulfat, 3,6 g oxethyliertem Nonylphenol, 13,1 g des nach Beispiel 1C) erhaltenen erfindungsgemäßen Schutzkolloids, 184,1 g Butylacrylat, 78,9 g Styrol, 6,75. g Methacrylsäure, 3,45 g Acrylsäure und 6,75 g Acrylamid wird der Kolbeninhalt auf 85°C aufgeheizt. Es werden 0,21 g Ammoniumpersulfat (APS), gelöst in 4,3 g E-Wasser, zugefügt und eine viertel Stunde später werden die restliche Monomerenemulsion sowie weitere 0,74 g APS, gelöst in 14,9 ml E-Wasser, innerhalb von 3 Stunden gleichmäßig zudosiert. Nach einer Nachreaktionszeit von 2,5 Stunden bei 83°C wird das Reaktionsgemisch auf Raumtemperatur abgekühlt und mit Ammoniak auf pH 8 eingestellt. Man erhält eine lagerungsstabile Dispersion mit einem Feststoffgehalt von 32,8 Gew.-% und einer MFT von < 0°C.

### Beispiel 7

In einem 2 l Dreihalskolben mit Rührer, Rückflußkühler und Innenthermometer wird eine Flotte aus 631 g E-wasser, 24 g oxethyliertem Nonylphenol, 3 g Natriumethensulfonat, 2,5 g Natriumacetat·3 H₂O, 12 g eines Ethylenoxid-Propylenoxid-Blockcopolymeren, 30 g des nach Beispiel 1C) erhaltenen erfindungsgemäßen Schutzkolloids und 2,5 g Kaliumpersulfat (KPS) hergestellt. Nach Zugabe von 60 g einer Monomerenmischung aus 400 g Vinylacetat und 200 g Vinylversatat heizt man die Flotte auf 80°C auf und dosiert das restliche Monomerengemisch innerhalb von 2,5 Stunden zu. Danach gibt man 0,5 g APS, gelöst in 15 g E-wasser, zu und läßt 1 Stunde bei 80°C nachreagieren. Während der folgenden Abkühlphase werden noch 0,5 g 30 %iges H₂O₂ und 0,3 g Ascorbinsäure, gelöst in 5 g E-Wasser, zugesetzt. Man erhält eine niedrigviskose, lagerungsstabile Dispersion mit einem Feststoffgehalt von 49,7 Gew.-% und einer MFT von 10°C.

### Vergleichsbeispiel 1

Die Ausführung erfolgt analog dem Beispiel 4 mit der Abänderung, daß anstelle des nach Beispiel 1C) erhaltenen erfindungsgemäßen Schutzkolloids die gleiche Menge eines Polyvinylalkohols (Hydrolysegrad 98 Mol-%, Viskosität der 4 gew.-%igen wäßrigen Lösung: 4 mPa·s) verwendet wird. Man erhält eine stippenreiche, nicht lagerungsstabile, unbrauchbare Dispersion.

### Vergleichsbeispiel 2

Die Ausführung erfolgt analog dem Beispiel 7 mit der Abänderung, daß anstelle des nach Beispiel 1C) erhaltenen erfindungsgemäßen Schutzkolloids die gleiche Menge eines Polyvinylalkohols (Hydrolysegrad 98 Mol-%, Viskosität der 4 gew.-%igen wäßrigen Lösung 4 mPa·s) verwendet wird. Die resultierende Dispersion ist stippig und instabil, was sich aus der Zunahme der Stippen beim Stehen des Latex äußert.

## Patentansprüche (Patentansprüche für folgende(n) Vertragsstaat(en): AT, BE, CH, DE, FR, GB, IT, LI, NL, SE)

1. Organische Dispersionspolymerisate auf der Basis von ethylenisch ungesättigten, polymerisationsfähigen bzw. copolymerisationsfähigen Monomeren, die in Gegenwart von Schutzkolloiden oder von Schutzkolloiden und Emulgatoren durch radikalisch initiierte Emulsions-, Suspensions- oder Perl-Polymerisation bzw. -Copolymerisation in wäßrigem Medium hergestellt wurden und in wäßriger Dispersionsform oder in feindisperser trockener Pulverform vorliegen, dadurch gekennzeichnet, daß sie als Schutzkolloide wasserlösliche und Vinylalkoholeinheiten auf einer Polyurethanpfropfgrundlage enthaltende Pfropfpolymerisate enthalten, wobei die Polyurethanpfropfgrundlagen mindestens 2 Urethangruppen im Molekül und Einheiten aus Diisocyanaten und gegebenenfalls geringen Mengen monofunktionellen Isocyanaten sowie Einheiten aus Diolen und/oder halbveresterten oder halbverätherten Diolresten enthalten, und auf die Polyurethanpfropfgrundlagen Polymerreste bzw. Polymerketten aus Einheiten von Carbonsäurevinylestern mit 3 bis 20 C-Atomen und/oder deren Verseifungsprodukten und gegebenenfalls Einheiten von weiteren ethylenisch ungesättigten, polymerisationsfähigen und gegebenenfalls verseifungsfähigen sowie gegebenenfalls copolymerisierten Monomeren und/oder deren Verseifungsprodukten aufgepfropft sind, wobei der Anteil an Vinylalkoholeinheiten in den wasserlöslichen Pfropfpolymerisaten mindestens 20 Gew.-%, bezogen auf das wasserlösliche Pfropfpolymerisat, und der Verseifungsgrad der auf die Polyurethanpfropfgrundlagen ursprünglich aufgepfropften Monomereinheiten mindestens 50 Mol-% beträgt.

2. Dispersionspolymerisate nach Anspruch 1, dadurch gekennzeichnet, daß sie die wasserlöslichen und Vinylalkoholeinheiten auf einer Polyurethanpfropfgrundlage enthaltenden Pfropfpolymerisate in einer Menge von 0,01 bis 20 Gew.-%, bezogen auf das Dispersionspolymerisat, enthalten.

3. Dispersionspolymerisate nach Anspruch 1 und/oder 2, dadurch gekennzeichnet, daß die in den wasserlöslichen und Vinylalkoholeinheiten enthaltenden Pfropfpolymerisaten enthaltenen Polyurethanpfropfgrundlagen Molekulargewichte zwischen 200 und 50000 g/mol besitzen.

4. Dispersionspolymerisate nach einem oder mehreren der Ansprüche 1 bis 3, dadurch gekennzeichnet, daß der Anteil der in den wasserlöslichen und Vinylalkoholeinheiten auf einer Polyurethanpfropfgrundlage enthaltenden Pfropfpolymerisaten auf die Polyurethanpfropfgrundlagen aufgepfropften Polymerreste > 10 Gew.-%, bezogen auf das wasserlösliche Pfropfpolymerisat, beträgt.

5. Dispersionspolymerisate nach einem oder mehreren der Ansprüche 1 bis 4, dadurch gekennzeichnet, daß in den wasserlöslichen und Vinylalkoholeinheiten auf einer Polyurethanpfropfgrundlage enthaltenden Pfropfpolymerisaten die Polyurethanpfropfgrundlage in der Diolkomponente Einheiten aus Alkylenglykol und/oder Polyalkylenglykol, vorzugsweise Polyethylenglykol, mit einem Molekulargewicht zwischen 400 und 10000 g/mol, oder Gemische aus diesen Einheiten, oder Gemische aus diesen Einheiten mit Einheiten aus niederen Alkylenglykolen mit bis zu 6 C-Atomen, enthält.

6. Dispersionspolymerisate nach einem oder mehreren der Ansprüche 1 bis 5, dadurch gekennzeichnet, daß sie außer Schutzkolloiden aus wasserlöslichen und Vinylalkoholeinheiten auf einer Polyurethanpfropfgrundlage enthaltenden Pfropfpolymerisaten noch weitere polymere Bestandteile aufweisen, die als Monomereinheiten, bezogen auf die polymeren Bestandteile,
a) 15 bis 100 Gew.-%, vorzugsweise 25 bis 99 Gew.-%, insbesondere 45 bis 98 Gew.-%, Verbindungen aus der Gruppe der Vinylester, (Meth-)Acrylester, Maleinsäure-/Fumarsäureester, Itakonsäureester, Crotonsäureester, Vinylaromaten, α-Olefine, ethylenisch ungesättigten Nitrile, Vinylhalogenide, Vinylidenhalogenide, und
b) 0 bis 60 Gew.-%, vorzugsweise 0,5 bis 30 Gew.-%, insbesondere 1 bis 10 Gew.-%, Verbindungen aus der Gruppe ethylenisch ungesättigter (C₃-C₅)-Monocarbonsäuren, ethylenisch ungesättigter (C₄-C₆)-Dicarbonsäuren oder deren Halbestern mit aliphatischen und gegebenenfalls substituierten (C₁-C₈)-Alkoholen, ethylenisch ungesättigter Sulfosäuren oder Phosphonsäuren oder Salze dieser Säuren, Hydroxy-(C₂-C₁₈)alkylacrylate, Hydroxy-(C₂-C₁₈)alkylmethacrylate, Hydroxy-(C₂-C₁₈)alkyl- oder Di[hydroxyl-(C₂-C₁₈)alkyl]-maleinate bzw. -fumarate, Hydroxy-(C₂-C₁₈)alkylcrotonate, Mono-oder Di-[hydroxy-(C₂-C₁₈)alkyl]itakonate, Monoester oder Diester von Polyalkylenglykoläthern mit ethylenisch ungesättigten (C₃-C₅)-Monocarbonsäuren bzw. ethylenisch ungesättigten (C₄-C₆)-Dicarbonsäuren, wobei die endständigen OH-Gruppen der Polyalkylenglykolätherreste auch veräthert oder verestert sein können, Amide von ethylenisch ungesättigten (C₃-C₆)-Mono- oder -Dicarbonsäuren, die am Amidstickstoff durch Reste mit 1 bis 7 C-Atomen oder Methylol- oder (C₁-C₁₈)-Alkoxymethylenreste substituiert sein können, ethylenisch ungesättigter Urethane bzw. Harnstoffe bzw. Silane, und
c) 0 bis 60 Gew.-%, vorzugsweise 0,5 bis 30 Gew.-%, insbesondere 1 bis 10 Gew.-%, ethylenisch ungesättigte primäre, sekundäre, tertiäre Amine bzw. quaternäre Ammoniumverbindungen aus der Gruppe der Amino-(C₁-C₂₄)alkylenacrylsäureester bzw. -methacrylsäureester, ihrer Mono-(C₁-C₂₄)alkylamino-bzw. Di[(C₁-C₂₄)alkyl]aminoderivate bzw. ihrer durch (C₁-C₂₄)-Alkylierung erhaltenen quaternären Ammoniumsalze bzw. ihrer quaternären Mono- bzw. Diallylammoniumderivate, und
d) 0 bis 5 Gew.-% mehrfach ethylenisch ungesättigte Verbindungen und/oder weitere Reaktivgruppen enthaltende einfach oder mehrfach ethylenisch ungesättigte Verbindungen, und
e) 0 bis 5 Gew.-% Molekulargewichtsregler aus der Gruppe Dodecylmercaptan, Tetrachlorkohlenstoff, Bromtrichlormethan, Tetrakismercaptoacetylpentaerythrit, Thioglykolsäure,
enthalten.

7. Verwendung von wasserlöslichen und Vinylalkoholeinheiten auf einer Polyurethanpfropfgrundlage enthaltenden Pfropfpolymerisaten nach einem oder mehreren der Ansprüche 1 bis 6 als Schutzkolloide bei der radikalisch initiierten Emulsions-, Suspensions- oder Perlpolymerisation bzw. -copolymerisation von ethylenisch ungesättigten und polymerisationsfähigen bzw. copolymerisationsfähigen Monomeren in wäßrigem Medium zur Herstellung von Dispersionspolymerisaten.

8. Verwendung der Dispersionspolymerisate nach einem oder mehreren der Ansprüche 1 bis 6 als Beschichtungsmasse für feste Substrate, insbesondere als nicht korrodierend wirkende Überzugsmasse für Metalle, in der Bauindustrie als Bindemittel bei der Herstellung von Beton, Mörtel, Putz und Anstrichen, als Ausgangsmaterial für die Herstellung von Filmen, Folien, Fasern, Klebstoffen, Lacken, Pressmassen und Formkörpern, als Verdicker in flüssigen Zubereitungen, als Imprägniermittel für poröse Substrate, ferner als Hilfsmittel zum Verkleben von Leder, Textilien, Papier sowie als Bindemittel bei der Papierherstellung, der Papierveredlung, der Textilimprägnierung, bei der Herstellung von Anstrichfarben sowie in der Baustoffindustrie.

## Patentansprüche (Patentansprüche für folgende(n) Vertragsstaat(en): ES)

1. Verfahren zur Herstellung von organischen Dispersionspolymerisaten auf der Basis von ethylenisch ungesättigten, polymerisationsfähigen bzw. copolymerisationsfähigen Monomeren in Gegenwart von Schutzkolloiden oder von Schutzkolloiden und Emulgatoren durch radikalisch initiierte Emulsions-, Suspensions- oder Perl-Polymerisation bzw. -Copolymerisation in wäßrigem Medium und Gewinnung der Polymerisate in wäßriger Dispersionsform oder in feindisperser trockener Pulverform, dadurch gekennzeichnet, daß man als Schutzkolloide wasserlösliche und Vinylalkoholeinheiten auf einer Polyurethanpfropfgrundlage enthaltende Pfropfpolymerisate einsetzt, wobei die Polyurethanpfropfgrundlagen mindestens 2 Urethangruppen im Molekül und Einheiten aus Diisocyanaten und gegebenenfalls geringen Mengen monofunktionellen Isocyanaten sowie Einheiten aus Diolen und/oder halbveresterten oder halbverätherten Diolresten enthalten, und auf die Polyurethanpfropfgrundlagen Polymerreste bzw. Polymerketten aus Einheiten von Carbonsäurevinylestern mit 3 bis 20 C-Atomen und/oder deren Verseifungsprodukten und gegebenenfalls Einheiten von weiteren ethylenisch ungesättigten, polymerisationsfähigen und gegebenenfalls verseifungsfähigen sowie gegebenenfalls copolymerisierten Monomeren und/oder deren Verseifungsprodukten aufgepfropft sind, wobei der Anteil an Vinylalkoholeinheiten in den wasserlöslichen Pfropfpolymerisaten mindestens 20 Gew.-%, bezogen auf das wasserlösliche Pfropfpolymerisat, und der Verseifungsgrad der auf die Polyurethanpfropfgrundlagen ursprünglich aufgepfropften Monomereinheiten mindestens 50 Mol-% beträgt.

2. Verfahren nach Anspruch 1, dadurch gekennzeichnet, daß die als Schutzkolloide verwendeten wasserlöslichen und Vinylalkoholeinheiten auf einer Polyurethanpfropfgrundlage enthaltenden Pfropfpolymerisate in einer Menge von 0,01 bis 20 Gew.-%, bezogen auf das Dispersionspolymerisat, eingesetzt werden.

3. Verfahren nach Anspruch 1 und/oder 2, dadurch gekennzeichnet, daß die in den als Schutzkolloide verwendeten wasserlöslichen und Vinylalkoholeinheiten enthaltenden Pfropfpolymerisaten enthaltenen Polyurethanpfropfgrundlagen Molekulargewichte zwischen 200 und 50000 g/mol besitzen.

4. Verfahren nach einem oder mehreren der Ansprüche 1 bis 3, dadurch gekennzeichnet, daß der Anteil der in den als Schutzkolloide verwendeten wasserlöslichen und Vinylalkoholeinheiten auf einer Polyurethanpfropfgrundlage enthaltenden Pfropfpolymerisaten auf die Polyurethanpfropfgrundlagen aufgepfropften Polymerreste > 10 Gew.-%, bezogen auf das wasserlösliche Pfropfpolymerisat, beträgt.

5. Verfahren nach einem oder mehreren der Ansprüche 1 bis 4, dadurch gekennzeichnet, daß in den als Schutzkolloide verwendeten wasserlöslichen und Vinylalkoholeinheiten auf einer Polyurethanpfropfgrundlage enthaltenden Pfropfpolymerisaten die Polyurethanpfropfgrundlage in der Diolkomponente Einheiten aus Alkylenglykol und/oder Polyalkylenglykol, vorzugsweise Polyethylenglykol, mit einem Molekulargewicht zwischen 400 und 10000 g/mol, oder Gemische aus diesen Einheiten, oder Gemische aus diesen Einheiten mit Einheiten aus niederen Alkylenglykolen mit bis zu 6 C-Atomen, enthält.

6. Verfahren nach einem oder mehreren der Ansprüche 1 bis 5, dadurch gekennzeichnet, daß außer Schutzkolloiden aus wasserlöslichen und Vinylalkoholeinheiten auf einer Polyurethanpfropfgrundlage enthaltenden Pfropfpolymerisaten als Monomere, bezogen auf die Gesamtmonomerenmenge,
a) 15 bis 100 Gew.-%, vorzugsweise 25 bis 99 Gew.-%, insbesondere 45 bis 98 Gew.-%, Verbindungen aus der Gruppe der Vinylester, (Meth-)Acrylester, Maleinsäure-/Fumarsäureester, Itakonsäureester, Crotonsäureester, Vinylaromaten, α-Olefine, ethylenisch ungesättigten Nitrile, Vinylhalogenide, Vinylidenhalogenide, und
b) 0 bis 60 Gew.-%, vorzugsweise 0,5 bis 30 Gew.-%, insbesondere 1 bis 10 Gew.-%, Verbindungen aus der Gruppe ethylenisch ungesättigter (C₃-C₅)-Monocarbonsäuren, ethylenisch ungesättigter (C₄-C₆)-Dicarbonsäuren oder deren Halbestern mit aliphatischen und gegebenenfalls substituierten (C₁-C₈)-Alkoholen, ethylenisch ungesättigter Sulfosäuren oder Phosphonsäuren oder Salze dieser Säuren, Hydroxy-(C₂-C₁₈)alkylacrylate, Hydroxy-(C₂-C₁₈)alkylmethacrylate, Hydroxy-(C₂-C₁₈)alkyl- oder Di[hydroxy-(C₂-C₁₈)alkyl]-maleinate bzw. fumarate, Hydroxy-(C₂-C₁₈)alkylcrotonate, Mono-oder Di-[hydroxy-(C₂-C₁₈)alkyl]itakonate, Monoester oder Diester von Polyalkylenglykoläthern mit ethylenisch ungesättigten (C₃-C₅)-Monocarbonsäuren bzw. ethylenisch ungesättigten (C₄-C₆)-Dicarbonsäuren, wobei die endständigen OH-Gruppen der Polyalkylenglykolätherreste auch veräthert oder verestert sein können, Amide von ethylenisch ungesättigten (C₃-C₆)-Mono- oder -Dicarbonsäuren, die am Amidstickstoff durch Reste mit 1 bis 7 C-Atomen oder Methylol- oder (C₁-C₁₈)-Alkoxymethylenreste substituiert sein können, ethylenisch ungesättigter Urethane bzw. Harnstoffe bzw. Silane, und
c) 0 bis 60 Gew.-%, vorzugsweise 0,5 bis 30 Gew.-%, insbesondere 1 bis 10 Gew.-%, ethylenisch ungesättigte primäre, sekundäre, tertiäre Amine bzw. quaternäre Ammoniumverbindungen aus der Gruppe der Amino-(C₁-C₂₄)alkylenacrylsäureester bzw. -methacrylsäureester, ihrer Mono-(C₁-C₂₄)alkylamino-bzw. Di[(C₁-C₂₄)alkyl]aminoderivate bzw. ihrer durch (C₁-C₂₄)-Alkylierung erhaltenen quaternären Ammoniumsalze bzw. ihrer quaternären Mono- bzw. Diallylammoniumderivate, und
d) 0 bis 5 Gew.-% mehrfach ethylenisch ungesättigte Verbindungen und/oder weitere Reaktivgruppen enthaltende einfach oder mehrfach ethylenisch ungesättigte Verbindungen, und
e) 0 bis 5 Gew.-% Molekulargewichtsregler aus der Gruppe Dodecylmercaptan, Tetrachlorkohlenstoff, Bromtrichlormethan, Tetrakismercaptoacetylpentaerythrit, Thioglykolsäure,
eingesetzt werden.

7. Verwendung von wasserlöslichen und Vinylalkoholeinheiten auf einer Polyurethanpfropfgrundlage enthaltenden Pfropfpolymerisaten nach einem oder mehreren der Ansprüche 1 bis 6 als Schutzkolloide bei der radikalisch initiierten Emulsions-, Suspensions- oder Perlpolymerisation bzw. -copolymerisation von ethylenisch ungesättigten und polymerisationsfähigen bzw. copolymerisationsfähigen Monomeren in wäßrigem Medium zur Herstellung von Dispersionspolymerisaten.

8. Verwendung der Dispersionspolymerisate, hergestellt nach einem oder mehreren der Ansprüche 1 bis 6, als Beschichtungsmasse für feste Substrate, insbesondere als nicht korrodierend wirkende Überzugsmasse für Metalle, in der Bauindustrie als Bindemittel bei der Herstellung von Beton, Mörtel, Putz und Anstrichen, als Ausgangsmaterial für die Herstellung von Filmen, Folien, Fasern, Klebstoffen, Lacken, Pressmassen und Formkörpern, als Verdicker in flüssigen Zubereitungen, als Imprägniermittel für poröse Substrate. Ferner als Hilfsmittel zum Verkleben von Leder, Textilien, Papier sowie als Bindemittel bei der Papierherstellung, der Papierveredlung, der Textilimprägnierung, bei der Herstellung von Anstrichfarben sowie in der Baustoffindustrie.

## Claims (Claims for the following Contracting State(s): AT, BE, CH, DE, FR, GB, IT, LI, NL, SE)

1. Organic dispersion polymers based on ethylenically unsaturated, polymerizable or copolymerizable monomers which have been prepared in the presence of protective colloids or protective colloids and emulsifiers by emulsion, suspension or bead polymerization or copolymerization, initiated by free radicals in an aqueous medium and are in aqueous dispersion form or in finely dispersed dry powder form, characterized in that they contain, as protective colloids, water-soluble graft polymers containing vinyl alcohol units on a polyurethane grafting base, the polyurethane grafting bases containing at least 2 urethane groups in the molecule and units of diisocyanates and if appropriate small amounts of monofunctional isocyanates, as well as units of diols and/or half-esterified or half-etherified diol radicals, and polymer radicals or polymeric chains of units of carboxylic acid vinyl esters having 3 to 20 carbon atoms and/or hydrolysis products thereof and if appropriate units of other ethylenically unsaturated polymerizable and if appropriate hydrolyzable and if appropriate copolymerized monomers and/or hydrolysis products thereof being grafted onto the polyurethane grafting bases, the amount of vinyl alcohol units in the water-soluble graft polymers being at least 20 % by weight, based on the water-soluble graft polymer, and the degree of hydrolysis on the monomer units originally grafted onto the polyurethane grafting bases being at least 50 mol %.

2. Dispersion polymers as claimed in claim 1, wherein the water-soluble graft polymers containing vinyl alcohol units on a polyurethane grafting base are contained in an amount of 0.01 to 20 % by weight, based on the dispersion polymer.

3. Dispersion polymers as claimed in claim 1 and/or 2, wherein the polyurethane grafting bases contained in the water-soluble graft polymers containing vinyl alcohol units have molecular weights of between 200 and 50,000 g/mol.

4. Dispersion polymers as claimed in one or more of claims 1 to 3, wherein the amount of polymer radicals grafted onto the polyurethane grafting bases in the water-soluble graft polymers containing vinyl alcohol units on a polyurethane grafting base is >10% by weight, based on the water-soluble graft polymer.

5. Dispersion polymers as claimed in one or more of claims 1 to 4, wherein, in the water-soluble graft polymers containing vinyl alcohol units on a polyurethane grafting base, the polyurethane grafting base contains, in the diol component, units of alkylene glycol and/or polyalkylene glycol, preferably polyethylene glycol, having a molecular weight of between 400 and 10,000 g/mol, or mixtures of these units, or mixtures of these units with units from lower alkylene glycols having up to 6 carbon atoms.

6. Dispersion polymers as claimed in one or more of claims 1 to 5, characterized in that they contain, in addition to protective colloids from water-soluble graft polymers containing vinyl alcohol units on a polyurethane graft base, further polymeric constituents which contain, as monomer units, based on the polymeric constituents,
a) 15 to 100% by weight, preferably 25 to 99% by weight, and in particular 45 to 98% by weight, of compounds from the group comprising vinyl esters, (meth)acrylic esters, maleic acid/fumaric acid esters, itaconic acid esters, crotonic acid esters, vinyl aromatics, α-olefins, ethylenically unsaturated nitriles, vinyl halides and vinylidene halides, and
b) 0 to 60% by weight, preferably 0.5 to 30% by weight and in particular 1 to 10% by weight, of compounds from the group comprising ethylenically unsaturated (C₃-C₅)-monocarboxylic acids, ethylenically unsaturated (C₄-C₆)-dicarboxylic acids or half-esters thereof with aliphatic and optionally substituted (C₁-C₈)-alcohols, ethylenically unsaturated sulfonic acids or phosphonic acids or salts of these acids, hydroxy-(C₂-C₁₈)alkyl acrylates, hydroxy-(C₂-C₁₈)alkyl methacrylates, hydroxy-(C₂-C₁₈)alkyl or di[hydroxy(C₂-C₁₈)alkyl] maleates or fumarates, hydroxy-(C₂-C₁₈)alkyl crotonates, mono- or di-[hydroxy-(C₂-C₁₈)-alkyl] itaconates, monoesters or diesters of polyalkylene glycol ethers with ethylenically unsaturated (C₃-C₅)-monocarboxylic acids or ethylenically unsaturated (C₄-C₆)-dicarboxylic acids, it also being possible for the terminal OH groups of the polyalkylene glycol ether radicals to be etherified or esterified, amides of ethylenically unsaturated (C₃-C₆)-mono- or -dicarboxylic acids which can be substituted on the amide nitrogen by radicals having 1 to 7 carbon atom or by methylol or (C₁-C₁₈)-alkoxymethylene radicals, and ethylenically unsaturated urethanes or ureas or silanes, and
c) 0 to 60% by weight, preferably 0.5 to 30% by weight and in particular 1 to 10% by weight, of ethylenically unsaturated primary, secondary or tertiary amines or quaternary ammonium compounds from the group comprising amino-(C₁-C₂₄)alkylene acrylates or methacrylates, their mono- and di-(C₁-C₂₄)alkylamino derivatives and their quaternary ammonium salts obtained by (C₁-C₂₄)-alkylation and their quaternary mono- and diallylammonium derivatives, and
d) 0 to 5% by weight of ethylenically polyunsaturated compounds and/or ethylenically mono- or polyunsaturated compounds containing other reactive groups, and
e) 0 to 5% by weight of molecular weight regulators from the group comprising dodecylmercaptan, carbon tetrachloride, bromotrichloromethane, tetrakismercaptoacetylpentaerythritol and thioglycolic acid.

7. The use of water-soluble graft polymers containing vinyl alcohol units on a polyurethane graft base, as claimed in one or more of claims 1 to 6, as protective colloids in the emulsion, suspension or bead polymerization or copolymerization, initiated by free radicals, of ethylenically unsaturated and polymerizable or copolymerizable monomers in an aqueous medium for the preparation of dispersion polymers.

8. The use of dispersion polymers as claimed in one or more of claims 1 to 6 as coating compositions for solid substrates, in particular as non-corrosive covering compositions for metals, in the construction industry as binders in the preparation of concrete, mortar, plaster and paints, as starting materials for the production of films, foils, fibers, adhesives, lacquers, pressing compositions and shaped articles, as thickeners in liquid formulations and as an impregnating agents for porous substrates, and furthermore as an auxiliaries for sticking leather, textiles and paper and as binders in paper making, paper finishing and textile impregnation and in the preparation of paints and in the construction industry.

## Claims (Claims for the following Contracting State(s): ES)

1. A process for preparing organic dispersion polymers based on ethylenically unsaturated, polymerizable or copolymerizable monomers, in the presence of protective colloids or protective colloids and emulsifiers by emulsion, suspension or bead polymerization or copolymerization, initiated by free radicals in an aqueous medium, hte polymes being obtained in aqueous dispersion form or in finely dispersed dry powder form, characterized in that the protective colloids used are water-soluble graft polymers containing vinyl alcohol units on a polyurethane grafting base, the polyurethane grafting bases containing at least 2 urethane groups in the molecule and units of diisocyanates and if appropriate small amounts of monofunctional isocyanates, as well as units of diols and/or half-esterified or half-etherified diol radicals, and polymer radicals or polymeric chains of units of carboxylic acid vinyl esters having 3 to 20 carbon atoms and/or hydrolysis products thereof and if appropriate units of other ethylenically unsaturated polymerizable and if appropriate hydrolyzable and if appropriate copolymerized monomers and/or hydrolysis products thereof being grafted onto the polyurethane grafting bases, the amount of vinyl alcohol units in the water-soluble graft polymers being at least 20 % by weight, based on the water-soluble graft polymer, and the degree of hydrolysis on the monomer units originally grafted onto the polyurethane grafting bases being at least 50 mol %.

2. Dispersion polymers as claimed in claim 1, wherein the water-soluble graft polymers containing vinyl alcohol units on a polyurethane grafting base are contained in an amount of 0.01 to 20 % by weight, based on the dispersion polymer.

3. A dispersion polymer as claimed in claim 1 and/or 2, wherein the polyurethane grafting bases contained in the water-soluble graft polymers containing vinyl alcohol units, which are used as protective colloids, have molecular weights of between 200 and 50,000 g/mol.

4. The process as claimed in one or more of claims 1 to 3, wherein the amount of polymer radicals grafted onto the polyurethane grafting bases in the water-soluble graft polymers containing vinyl alcohol units on a polyurethane grafting base, which are used as protective colloids, is >10% by weight, based on the water-soluble graft polymer.

5. The process as claimed in one or more of claims 1 to 4, wherein, in the water-soluble graft polymers containing vinyl alcohol units on a polyurethane grafting base, which are used as protective colloids, the polyurethane grafting base contains, in the diol component, units of alkylene glycol and/or polyalkylene glycol, preferably polyethylene glycol, having a molecular weight of between 400 and 10,000 g/mol, or mixtures of these units, or mixtures of these units with units from lower alkylene glycols having up to 6 carbon atoms.

6. The process as claimed in one or more of claims 1 to 5, wherein, in addition to protective colloids from water-soluble graft polymers containing vinyl alcohol units on a polyurethane graft base, further monomers selected from the following groups are used, the percentages being each time related to the total amount of monomers,
a) 15 to 100 % by weight, preferably 25 to 99 % by weight, and in particular 45 to 98 % by weight, of compounds from the group comprising vinyl esters, (meth)acrylic esters, maleic acid/fumaric acid esters, itaconic acid esters, crotonic acid esters, vinyl aromatics, α-olefins, ethylenically unsaturated nitriles, vinyl halides and vinylidene halides, and
b) 0 to 60% by weight, preferably 0.5 to 30% by weight and in particular 1 to 10% by weight, of compounds from the group comprising ethylenically unsaturated (C₃-C₅)-monocarboxylic acids, ethylenically unsaturated (C₄-C₆)-dicarboxylic acids or half-esters thereof with aliphatic and optionally substituted (C₁-C₈)-alcohols, ethylenically unsaturated sulfonic acids or phosphonic acids or salts of these acids, hydroxy-(C₂-C₁₈)alkyl acrylates, hydroxy-(C₂-C₁₈)alkyl methacrylates, hydroxy-(C₂-C₁₈)alkyl or di[hydroxy(C₂-C₁₈)alkyl] maleates or fumarates, hydroxy-(C₂-C₁₈)alkyl crotonates, mono- or di-[hydroxy-(C₂-C₁₈)-alkyl] itaconates, monoesters or diesters of polyalkylene glycol ethers with ethylenically unsaturated (C₃-C₅)-monocarboxylic acids or ethylenically unsaturated (C₄-C₆)-dicarboxylic acids, it also being possible for the terminal OH groups of the polyalkylene glycol ether radicals to be etherified or esterified, amides of ethylenically unsaturated (C₃-C₆)-mono- or -dicarboxylic acids which can be substituted on the amide nitrogen by radicals having 1 to 7 carbon atoms or methylol or (C₁-C₁₈)-alkoxymethylene radicals and ethylenically unsaturated urethanes or ureas or silanes, and
c) 0 to 60% by weight, preferably 0.5 to 30% by weight and in particular 1 to 10% by weight, of ethylenically unsaturated primary, secondary or tertiary amines or quaternary ammonium compounds from the group comprising amino-(C₁-C₂₄)alkylene acrylates or methacrylates, their mono- and di-(C₁-C₂₄)alkylamino derivatives and their quaternary ammonium salts obtained by (C₁-C₂₄)-alkylation and their quaternary mono- and diallylammonium derivatives, and
d) 0 to 5% by weight of ethylenically polyunsaturated compounds and/or ethylenically mono- or polyunsaturated compounds containing other reactive groups, and
e) 0 to 5% by weight of molecular weight regulators from the group comprising dodecylmercaptan, carbon tetrachloride, bromotrichloromethane, tetrakismercaptoacetylpentaerythritol and thioglycolic acid.

7. The use of water-soluble graft polymers containing vinyl alcohol units on a polyurethane graft base, as claimed in one or more of claims 1 to 6, as protective colloids in the emulsion, suspension or bead polymerization or copolymerization, initiated by free radicals, of ethylenically unsaturated and polymerizable or copolymerizable monomers in an aqueous medium for the preparation of dispersion polymers.

8. The use of the dispersion polymers, prepared as claimed in one or more of claims 1 to 6, as coating compositions for solid substrates, in particular as non-corrosive covering compositions for metals, in the construction industry as binders in the preparation of concrete, mortar, plaster and paints, as starting materials for the production of films, foils, fibers, adhesives, lacquers, pressing compositions and shaped articles, as thickeners in liquid formulations and as impregnating agents for porous substrates, and furthermore as auxiliaries for sticking leather, textiles and paper and as binders in paper making, paper finishing and textile impregnation and in the preparation of paints and in the construction industry.

## Revendications (Revendications pour l'(les) Etat(s) contractant(s) suivant(s): AT, BE, CH, DE, FR, GB, IT, LI, NL, SE)

1. Polymères organiques en dispersion, à base de monomères polymérisables ou copolymérisables, à insaturation éthylénique, qui ont été préparés en milieu aqueux en présence de colloïdes protecteurs ou encore de colloïdes protecteurs et d'émulsifiants, par polymérisation ou copolymérisation en émulsion, en suspension ou en perles, et se présentent sous forme d'une dispersion aqueuse ou d'une poudre sèche finement dispersée, caractérisés en ce qu'ils contiennent en tant que colloïdes protecteurs des copolymères greffés solubles dans l'eau et contenant des motifs alcool vinylique sur une base de greffage de polyuréthanne, les bases de greffage de polyuréthanne contenant au moins deux groupes uréthanne par molécule et des motifs de diisocyanates et éventuellement de faibles quantités de diisocyanates monofonctionnels, ainsi que des motifs de diols et/ou de résidus diol semi-estérifiés ou semi-éthérifiés, tandis que, sur les bases de greffage de polyuréthanne, sont greffés des résidus polymères ou des chaînes polymères constitués de motifs de carboxylates de vinyle ayant de 3 à 20 atomes de carbone et/ou leurs produits de saponification, et éventuellement de motifs d'autres monomères à insaturation éthylénique, polymérisables et éventuellement saponifiables, et éventuellement copolymérisables, et/ou leurs produits de saponification, la quantité des motifs alcool vinylique dans les copolymères greffés solubles dans l'eau étant d'au moins 20 % en poids par rapport au copolymère greffé soluble dans l'eau, le degré de saponification des motifs monomères initialement greffés sur les bases de greffage de polyuréthanne étant d'au moins 50 % en moles.

2. Polymères en dispersion selon la revendication 1, caractérisés en ce qu'ils contiennent les copolymères greffés solubles dans l'eau et contenant des motifs alcool vinylique sur une base de greffage de polyuréthanne en une quantité de 0,01 à 20 % en poids par rapport au polymère en dispersion.

3. Polymères en dispersion selon les revendications 1 et/ou 2, caractérisés en ce que les bases de greffage de polyuréthanne solubles dans l'eau et contenant des copolymères greffés contenant des motifs alcool vinylique ont une masse moléculaire de 200 à 50 000 g/mole.

4. Polymères en dispersion selon l'une ou plusieurs des revendications 1 à 3, caractérisés en ce que, dans les copolymères greffés solubles dans l'eau contenant des motifs alcool vinylique sur une base de greffage de polyuréthanne, la quantité des résidus polymères greffés sur les bases de greffage de polyuréthanne est supérieure à 10 % en poids par rapport au copolymère greffé soluble dans l'eau.

5. Polymères en dispersion selon l'une ou plusieurs des revendications 1 à 4, caractérisés en ce que, dans les copolymères greffés solubles dans l'eau et contenant des motifs alcool vinylique sur une base de greffage de polyuréthanne, la base de greffage de polyuréthanne contient dans le composant diol des motifs d'alkylèneglycol et/ou de polyalkylèneglycol, de préférence de polyéthylèneglycol, ayant une masse moléculaire de 400 à 10 000 g/mole, ou encore des mélanges de ces motifs ou aussi des mélanges de ces motifs avec des motifs d'alkylèneglycols inférieurs ayant jusqu'à 6 atomes de carbone.

6. Polymères en dispersion selon l'une ou plusieurs des revendications 1 à 5, caractérisés en ce qu'ils contiennent, outre des colloïdes protecteurs constitués de copolymères greffés solubles dans l'eau et contenant des motifs alcool vinylique sur une base de greffage de polyuréthanne, d'autres constituants polymères, qui contiennent en tant que motifs monomères, les pourcentages étant rapportés aux constituants polymères :
a) de 15 à 100, de préférence de 25 à 99 et en particulier de 45 à 98 % en poids de composés choisis parmi l'ensemble comprenant les esters vinyliques, les esters (méth)acryliques, les maléates/fumarates, les itaconates, les crotonates, les substances vinylaromatiques, les α-oléfines, les nitriles à insaturation éthylénique, les halogénures de vinyle, les halogénures de vinylidène, et
b) de 0 à 60 % en poids, de préférence de 0,5 à 30 % en poids et en particulier de 1 à 10 % en poids de composés choisis parmi l'ensemble comprenant les acides monocarboxyliques en C₃-C₅ à insaturation éthylénique, les acides dicarboxyliques en C₄-C₆ à insaturation éthylénique ou leurs semi-esters avec des alcools en C₁-C₈ aliphatiques et éventuellement substitués, les acides sulfonés ou phosphonés à insaturation éthylénique ou les sels de ces acides, les acrylates d'hydroxyalkyle en C₂-C₁₈, les méthacrylates d'hydroxyalkyle en C₂-C₁₈, les maléates ou fumarates d'hydroxyalkyle en C₂-C₁₈ ou de di(hydroxyalkyle en C₂-C₁₈), les crotonates d'hydroxyalkyle en C₂-C₁₈, les itaconates de mono- ou di-(hydroxyalkyle en C₂-C₁₈), les monoesters ou diesters d'éthers de polyalkylèneglycol avec des acides monocarboxyliques en C₃-C₅ à insaturation éthylénique, ou encore les acides dicarboxyliques en C₄-C₆ à insaturation éthylénique, les groupes OH terminaux des résidus éther de polyalkylèneglycol pouvant aussi être éthérifiés ou estérifiés, les amides d'acides mono- ou dicarboxyliques en C₃-C₆ à insaturation éthylénique, qui peuvent être substitués sur l'azote d'amide par des résidus ayant de 1 à 7 atomes de carbone ou des résidus méthylol ou (alcoxy en C₁-C₁₈)méthyle, les uréthannes ou urées ou silanes à insaturation éthylénique, et
c) de 0 à 60 % en poids, de préférence de 0,5 à 30 % en poids, en particulier de 1 à 10 % en poids d'amines primaires, secondaires ou tertiaires ou de composés de l'ammonium quaternaire, à insaturation éthylénique, choisis parmi l'ensemble comprenant les esters des acides amino(alkylène en C₁-C₂₄) acryliques ou méthacryliques, leurs dérivés mono-(alkyle en C₁-C₂₄) aminés ou di(alkyle en C₁-C₂₄) aminés ou leurs sels d'ammonium quaternaire obtenus par alkylation en C₁-C₂₄, ou leurs dérivés du mono- ou du diallylammonium quaternaire, et
d) de 0 à 5 % en poids de composés à plusieurs insaturations éthyléniques et/ou de composés contenant d'autres groupes réactifs et à une ou plusieurs insaturations éthyléniques, et
e) de 0 à 5 % en poids de régulateurs de masse moléculaire choisis parmi l'ensemble comprenant le dodécylmercaptan, le tétrachlorure de carbone, le bromotrichlorométhane, le tétrakismercaptoacétylpentaérythritol, l'acide thioglycolique.

7. Utilisation de copolymères greffés solubles dans l'eau et contenant des motifs alcool vinylique sur une base de greffage de polyuréthanne selon l'une ou plusieurs des revendications 1 à 6, en tant que colloïdes protecteurs lors de la polymérisation ou de la copolymérisation radicalaires en émulsion, en suspension ou en perles, de monomères à insaturation éthylénique et polymérisables ou copolymérisables, en milieu aqueux, pour préparer des polymères en dispersion.

8. Utilisation des polymères en dispersion selon l'une ou plusieurs des revendications 1 à 6 comme composition de revêtement pour substrats solides, notamment comme composition de revêtement à effet non corrosif sur des métaux, dans l'industrie de la construction en tant que liant lors de la fabrication du béton, du mortier, des enduits et des revêtements, en tant que matériau de départ pour la fabrication de films, de feuilles, de fibres, d'adhésifs, de vernis et peintures, de mélanges à mouler et d'objets moulés, en tant qu'épaississant dans les préparations liquides, en tant qu'agent d'imprégnation pour substrats poreux, et de plus en tant qu'adjuvant pour coller le cuir, les textiles et le papier, et en tant que liant lors de la fabrication du papier, du traitement superficiel du papier, de l'imprégnation des textiles, lors de la fabrication des peintures et dans l'industrie de la construction.

## Revendications (Revendications pour l'(les) Etat(s) contractant(s) suivant(s): ES)

1. Procédé pour préparer des polymères organiques en dispersion, à base de monomères polymérisables ou copolymérisables, à insaturation éthylénique, en milieu aqueux en présence de colloïdes protecteurs ou encore de colloïdes protecteurs et d'émulsifiants, par polymérisation ou copolymérisation en émulsion, en suspension ou en perles, ces polymères se présentant sous forme d'une dispersion aqueuse ou d'une poudre sèche finement dispersée, caractérisé en ce qu'on utilise en tant que colloïdes protecteurs des copolymères greffés solubles dans l'eau et contenant des motifs alcool vinylique sur une base de greffage de polyuréthanne, les bases de greffage de polyuréthanne contenant au moins deux groupes uréthanne par molécule et des motifs de diisocyanates et éventuellement de faibles quantités de diisocyanates monofonctionnels, ainsi que des motifs de diols et/ou de résidus diol semi-estérifiés ou semi-éthérifiés, tandis que, sur les bases de greffage de polyuréthanne, sont greffés des résidus polymères ou des chaînes polymères constitués de motifs de carboxylates de vinyle ayant de 3 à 20 atomes de carbone et/ou leurs produits de saponification, et éventuellement de motifs d'autres monomères à insaturation éthylénique, polymérisables et éventuellement saponifiables, et éventuellement copolymérisables, et/ou leurs produits de saponification, la quantité des motifs alcool vinylique dans les copolymères greffés solubles dans l'eau étant d'au moins 20 % en poids par rapport au copolymère greffé soluble dans l'eau, le degré de saponification des motifs monomères initialement greffés sur les bases de greffage de polyuréthanne étant d'au moins 50 % en modes.

2. Procédé selon la revendication 1, caractérisé en ce qu'on utilise les copolymères greffés utilisés comme colloïdes protecteurs, solubles dans l'eau et contenant des motifs alcool vinylique sur une base de greffage de polyuréthanne en une quantité de 0,01 à 20 % en moles par rapport au polymère en dispersion.

3. Procédé selon les revendications 1 et/ou 2, caractérisé en ce que les bases de greffage de polyuréthanne solubles dans l'eau et contenant des copolymères greffés contenant des motifs alcool vinylique ont une masse moléculaire de 200 à 50 000 g/mole.

4. Procédé selon l'une ou plusieurs des revendications 1 à 3, caractérisé en ce que, dans les copolymères greffés solubles dans l'eau contenant des motifs alcool vinylique sur une base de greffage de polyuréthanne, la quantité des résidus polymères greffés sur les bases de greffage de polyuréthanne est supérieure à 10 % en poids par rapport au copolymère greffé soluble dans l'eau.

5. Procédé selon l'une ou plusieurs des revendications 1 à 4, caractérisé en ce que, dans les copolymères greffés solubles dans l'eau et contenant des motifs alcool vinylique sur une base de greffage de polyuréthanne, la base de greffage de polyuréthanne contient dans le composant diol des motifs d'alkylèneglycol et/ou de polyalkylèneglycol, de préférence de polyéthylèneglycol, ayant une masse moléculaire de 400 à 10 000 g/mole, ou encore des mélanges de ces motifs ou aussi des mélanges de ces motifs avec des motifs d'alkylèneglycols inférieurs ayant jusqu'à 6 atomes de carbone.

6. Procédé selon l'une ou plusieurs des revendications 1 à 5, caractérisé en ce qu'on utilise, outre des colloïdes protecteurs constitués de copolymères greffés solubles dans l'eau et contenant des motifs alcool vinylique sur une base de greffage de polyuréthanne, d'autres constituants polymères, qui contiennent en tant que motifs monomères, les pourcentages étant rapportés aux constituants polymères :
a) de 15 à 100 % en poids, de préférence de 25 à 99 % en poids et en particulier de 45 à 98 % en poids de composés choisis parmi l'ensemble comprenant les esters vinyliques, les esters (méth)acryliques, les maléates/fumarates, les itaconates, les crotonates, les substances vinylaromatiques, les α-oléfines, les nitriles à insaturation éthylénique, les halogénures de vinyle, les halogénures de vinylidène, et
b) de 0 à 60 % en poids, de préférence de 0,5 à 30 % en poids et en particulier de 1 à 10 % en poids de composés choisis parmi l'ensemble comprenant les acides monocarboxyliques en C₃-C₅ à insaturation éthylénique, les acides dicarboxyliques en C₄-C₆ à insaturation éthylénique ou leurs semi-esters avec des alcools en C₁-C₈ aliphatiques et éventuellement substitués, les acides sulfonés ou phosphonés à insaturation éthylénique ou les sels de ces acides, les acrylates d'hydroxyalkyle en C₂-C₁₈, les méthacrylates d'hydroxyalkyle en C₂-C₁₈, les maléates ou fumarates d'hydroxyalkyle en C₂-C₁₈ ou de di(hydroxyalkyle en C₂-C₁₈), les crotonates d'hydroxyalkyle en C₂-C₁₈, les itaconates de mono- ou di-(hydroxyalkyle en C₂-C₁₈), les monoesters ou diesters d'éthers de polyalkylèneglycol avec des acides monocarboxyliques en C₃-C₅ à insaturation éthylénique, ou encore les acides dicarboxyliques en C₄-C₆ à insaturation éthylénique, les groupes OH terminaux des résidus éther de polyalkylèneglycol pouvant aussi être éthérifiés ou estérifiés, les amides d'acides mono- ou dicarboxyliques en C₃-C₆ à insaturation éthylénique, qui peuvent être substitués sur l'azote d'amide par des résidus ayant de 1 à 7 atomes de carbone ou des résidus méthylol ou (alcoxy en C₁-C₁₈)méthyle, les uréthannes ou urées ou silanes à insaturation éthylénique, et
c) de 0 à 60 % en poids, de préférence de 0,5 à 30 % en poids, en particulier de 1 à 10 % en poids d'amines primaires, secondaires ou tertiaires ou de composés de l'ammonium quaternaire, à insaturation éthylénique, choisis parmi l'ensemble comprenant les esters des acides amino(alkylène en C₁-C₂₄) acryliques ou méthacryliques, leurs dérivés mono-(alkyle en C₁-C₂₄) aminés ou di(alkyle en C₁-C₂₄) aminés ou leurs sels d'ammonium quaternaire obtenus par alkylation en C₁-C₂₄, ou leurs dérivés du mono- ou du diallylammonium quaternaire, et
d) de 0 à 5 % en poids de composés à plusieurs insaturations éthyléniques et/ou de composés contenant d'autres groupes réactifs et à une ou plusieurs insaturations éthyléniques, et
e) de 0 à 5 % en poids de régulateurs de masse moléculaire choisis parmi l'ensemble comprenant le dodécylmercaptan, le tétrachlorure de carbone, le bromotrichlorométhane, le tétrakismercaptoacétylpentaérythritol, l'acide thioglycolique.

7. Utilisation de copolymères greffés solubles dans l'eau et contenant des motifs alcool vinylique sur une base de greffage de polyuréthanne selon l'une ou plusieurs des revendications 1 à 6, en tant que colloïdes protecteurs lors de la polymérisation ou de la copolymérisation radicalaires en émulsion, en suspension ou en perles, de monomères à insaturation éthylénique et polymérisables ou copolymérisables, en milieu aqueux, pour préparer des polymères en dispersion.

8. Utilisation des polymères en dispersion préparés selon l'une ou plusieurs des revendications 1 à 6, comme composition de revêtement pour substrats solides, notamment comme composition de revêtement à effet non corrosif sur des métaux, dans l'industrie de la construction en tant que liant lors de la fabrication du béton, du mortier, des enduits et des revêtements, en tant que matériau de départ pour la fabrication de films, de feuilles, de fibres, d'adhésifs, de vernis et peintures, de mélanges à mouler et d'objets moulés, en tant qu'épaississant dans les préparations liquides, en tant qu'agent d'imprégnation pour substrats poreux, et de plus en tant qu'adjuvant pour coller le cuir, les textiles et le papier, et en tant que liant lors de la fabrication du papier, du traitement superficiel du papier, de l'imprégnation des textiles, lors de la fabrication des peintures et dans l'industrie de la construction.
